# EUROPEAN PATENT APPLICATION

(11) **EP 4 181 077 A1**
(43) Date of publication of application: **17.05.2023**
(21) Application number: 21207840.6
(22) Date of filing: 11.11.2021
(51) Int. Cl.: G06V 10/24, G06T 7/00, G06V 10/42, G06V 10/44, G06V 10/75, G06V 20/69

(54) **METHOD OF EVALUATING AT LEAST ONE IMAGE OF AT LEAST ONE MICRO-ARRAY**

(71) Applicant: Fraunhofer-Gesellschaft zur Förderung der angewandten Forschung e.V., 80686 München (DE)
(72) Inventor: Zürner, Sebastian, 04275 Leipzig (DE); Popp, Georg, 04315 Leipzig (DE); Braumann, Ulf-Dietrich, 04155 Leipzig (DE)
(74) Representative: Altmann Stößel Dick Patentanwälte PartG mbB

(57) **Abstract**

A computer-implemented method of evaluating at least one image (110) of at least one micro-array (112) on a substrate (114), specifically of at least one microscopic fluorescence image (116) of the micro-array (112), the method comprising:
i. at least one retrieving step, comprising retrieving the at least one image (110) and retrieving at least one set of deposition data comprising information on a deposition of spots (120) of the micro-array (112) on the substrate (114);
ii. at least one pattern recognition step for automatically detecting a printing pattern (130) of the micro-array (112) in the image (110), comprising
ii.1. generating a set of test patterns (132) comprising a plurality of test patterns (132), by using the set of deposition data,
ii.2. comparing the set of test patterns (132) with information retrieved from the image (110), and
ii.3. generating an estimate printing pattern (148) in accordance with a degree of congruence of the test patterns (132) with the image (110), the estimate printing pattern (148) having a pattern of grid points (150);

iii. at least one dividing step, comprising automatically selecting sub-images (164) of the image (110) in accordance with the grid points (150) of the estimate printing pattern (148); and
iv. at least one segmentation step, comprising automatically segmenting spots (120) of the printing pattern (130) in the sub-images (164).

Further disclosed are an image evaluation system (208) for evaluating the at least one image (110) of the at least one micro-array (112) and a computer program and a computer-readable storage medium for performing the method.

## Description

### Technical Field

The present invention relates to a computer-implemented method of evaluating at least one image of at least one micro-array and to an image evaluation system for evaluating the at least one image. The invention further relates to a computer program and a computer-readable storage medium for performing the method. The method and devices may, as an example, be used for evaluating microscopic fluorescence images of micro-arrays. However, other images, such as microscopic images of micro-arrays are also feasible.

### Background art

Micro-arrays may comprise an array of items arranged on a solid substrate, for example on a glass slide, for the purpose of testing samples, such as tissue samples or other biological material, for one or more of DNA, RNA, peptides, proteins and/or carbohydrates. Generally, micro-arrays are analyzed by imaging the micro-array after exposure to the testing sample by using optical microscopy, specifically fluorescence microscopy. For this purpose, the testing sample may be labeled with one or more fluorescent dye molecules prior to exposure to the micro-array.

Several software applications are known for automatically analyzing images of micro-arrays, for example: Annotare, MAGE-TAB, KUTE-BASE, MicroGen^{®}, MIAMExpress, Gene Traffic, Ipsogen Cancer Profiler, BASE, GeneData Expressionist, Partisan Array LIMS, LIMaS, Gene Director, GeneSpring^{®}, GeNet, MCHIPS, maxd, GenoWiz, RAD, GenePix^{®}, TeraGenomics, almaZen, GeneSifter^{®}, SeqExpress, MIAME Spice, ArrayHub, Feature Extraction, TM4, SAS Microarray, GenStat^{®}, GeneMaths XT und Tab2MAGE.

However, analyzing images of micro-arrays with low signal intensity, for example due to dye fading and/or low activity of the testing sample, may generally be a manual process. Known software applications, for example software applications as listed above, may only be used for images of sufficient intensity. Manually analyzing images of micro-arrays may be a time-and cost-intense process.

For example, the software application GenePix^{®} Pro 7 as described in "Software User Guide - Axon GenePix® Pro 7 Software for Microarray Analysis", published by MDS Analytical Technologies in 2008, may be used for automatically analyzing images of micro-arrays. The analysis of images may comprise an automatic detection of spots of the micro-array and a segmentation of the detected spots. However, the software application GenePix^{®} Pro 7 may have its shortcomings when automatically detecting spots of the micro-array in low-intensity images. In this case, the user may have to manually detect spots of low intensity in the image. Additionally, artifacts in the images may cause a total failure of automatic spot detection. Further, the segmentation of spots in the image may also be prone to errors even though the spots are manually detected prior to segmenting. Therefore, generally, users of the software application GenePix^{®} Pro 7 may have to manually check and verify the segmentation process, too. The result of the analysis may be in general dependent on a user experience.

Despite above-identified technical challenges, the software application GenePix^{®} Pro 7 may be extensively used, for example in Chen, M.-X., et al. "DNA microarray detection of 18 important human blood protozoan species", PLoS neglected tropical diseases, 10(12), e0005160, 2016, in von der Haar, M., et al. "Array Analysis Manager-An automated DNA microarray analysis tool simplifying microarray data filtering, bias recognition, normalization, and expression analysis", Engineering in Life Sciences, 17.8, 841-846, 2017, in Kilb, N., et al. "Protein Microarray Copying: Easy on-Demand Protein Microarray Generation Compatible with Fluorescence and Label-Free Real-Time Analysis", ChemBioChem, 20.12, 1554-1562, 2019, and in Wohrle, J., et al. "Digital DnA microarray generation on glass substrates", Scientific reports, 10.1, 1-9, 2020.

As another example, the software application ScanArray Express as described in "ScanArray Express - Microarray Analysis System - User Manual", published by PerkinElmer Life Science, Inc. in 2002, may also be used for automatically analyzing images of micro-arrays. Similar to the software application GenePix^{®} Pro 7, the analysis of images may comprise an automatic detection of spots of the micro-array and a segmentation of the detected spots.

Further, Nagarajan R. and Upreti M. describe in "Correlation Statistics for cDNA Microarray Image Analysis", IEEE/ACM transactions on computational biology and bioinformatics, Vol. 3, No. 3, 232-238, 2006, a correlation of the pixels comprising a microarray spot. Subsequently, correlation statistics, namely, Pearson correlation and Spearman rank correlation, are used to segment the foreground and background intensity of microarray spots.

Chen W.-B. et al., describe in "An Automated Gridding and Segmentation Method for cDNA Microarray Image Analysis", Proceedings of the 19th IEEE Symposium on Computer-Based Medical Systems, 2006, a three-step method for automatic gridding and spot segmentation. The method starts with a background removal and noise eliminating step, and then proceeds in two steps. The first step applies a fully unsupervised method to extract blocks and grids from the cleaned data. The second step applies a simple, progressive spot segmentation method to deal with inner holes and noise in spots.

Zacharia E. and Maroulis D. describe in "An Original Genetic Approach to the Fully Automatic Gridding of Microarray Images", IEEE Transactions on medical imaging, Vol. 27, No. 6, 2008, an original and fully automatic approach for accurately locating a distorted grid structure in a microarray image. The gridding process is expressed as an optimization problem which is solved by using a genetic algorithm (GA). The GA determines the line-segments constituting the grid structure.

Despite the advantages achieved by known methods and devices, several technical challenges remain. Specifically, known methods for automatically analyzing images of micro-arrays may be deficient for images differing from a standard image, such as images with artifacts and/or images with low signal intensities. In these cases, manual analysis may generally be the only suitable option for analyzing the images, which is, however, a time-and cost-intensive process.

### Problem to be solved

It is therefore desirable to provide methods and device which at least partially address above-mentioned technical challenges. Specifically, a method and an image evaluation system shall be proposed which provide a robust and preferably fully automatic process of evaluating micro-array images.

### Summary

This problem is addressed by a computer-implemented method of evaluating at least one image of at least one micro-array and by an image evaluation system with the features of the independent claims. Advantageous embodiments which might be realized in an isolated fashion or in any arbitrary combinations are listed in the dependent claims as well as throughout the specification.

As used in the following, the terms "have", "comprise" or "include" or any arbitrary grammatical variations thereof are used in a non-exclusive way. Thus, these terms may both refer to a situation in which, besides the feature introduced by these terms, no further features are present in the entity described in this context and to a situation in which one or more further features are present. As an example, the expressions "A has B", "A comprises B" and "A includes B" may both refer to a situation in which, besides B, no other element is present in A (i.e. a situation in which A solely and exclusively consists of B) and to a situation in which, besides B, one or more further elements are present in entity A, such as element C, elements C and D or even further elements.

Further, it shall be noted that the terms "at least one", "one or more" or similar expressions indicating that a feature or element may be present once or more than once typically will be used only once when introducing the respective feature or element. In the following, in most cases, when referring to the respective feature or element, the expressions "at least one" or "one or more" will not be repeated, non-withstanding the fact that the respective feature or element may be present once or more than once.

Further, as used in the following, the terms "preferably", "more preferably", "particularly", "more particularly", "specifically", "more specifically" or similar terms are used in conjunction with optional features, without restricting alternative possibilities. Thus, features introduced by these terms are optional features and are not intended to restrict the scope of the claims in any way. The invention may, as the skilled person will recognize, be performed by using alternative features. Similarly, features introduced by "in an embodiment of the invention" or similar expressions are intended to be optional features, without any restriction regarding alternative embodiments of the invention, without any restrictions regarding the scope of the invention and without any restriction regarding the possibility of combining the features introduced in such way with other optional or non-optional features of the invention.

In a first aspect of the present invention, a computer-implemented method of evaluating at least one image of at least one micro-array on a substrate, specifically of at least one microscopic fluorescence image of the micro-array, is disclosed.

The term "micro-array" as used herein is a broad term and is to be given its ordinary and customary meaning to a person of ordinary skill in the art and is not to be limited to a special or customized meaning. The term specifically may refer, without limitation, to a regular pattern of a plurality of items, such as compounds, compositions, organisms, viruses or the like. The compounds, as an example, may comprise peptides, polypeptides, nucleic acids (RNA, DNA), small molecules (e.g. metabolites and/or drugs). The compositions may comprise, as an example, biological and/or environmental samples. The organisms may comprise, as an example, microorganisms such as bacteria, eucaryotic cells or yeast. The items may be arranged in the regular pattern on the substrate, specifically on at least one surface of the substrate. The regular pattern of the micro-array may comprise a rectangular pattern, a quadratic pattern or a circular pattern of the plurality of aliquots of the at least one sample. The micro-array may specifically comprise a number of blocks, each block comprising a first number of items in a horizontal direction and a second number of items in a vertical direction, wherein the items in each block may be arranged according to the regular pattern of the micro-array. The micro-array specifically may be configured for or used for performing at least one detection reaction with at least one sample to be tested, such as in order to determine at least one property and/or at least one parameter of the sample, for example with a tissue sample and/or with other biological material. Thus, the items of the micro-array may be or may comprise aliquots of the at least one sample to be tested. Additionally or alternatively, the items of the micro-array may comprise test substances and/or testing aids for performing the at least one detection reaction and/or at least one partial step of the at least one detection reaction. Thus, the micro-array specifically may be configured for testing the sample for a presence and/or a concentration of one or more of DNA, RNA, peptides, proteins and/or carbohydrates. For example, the micro-array may comprise a plurality of different items, each item comprising, by way of example, a specific DNA or RNA sequence. However, redundancies of items of the micro-array may still be possible. The items may comprise or may be labeled with one or more fluorescent dye molecules prior to application of the sample to the micro-array. Thus, it may be possible to detect the detection reaction by optical means, such as by using at least one optical microscope, specifically at least one fluorescence optical microscope. It shall be noted, however, that other types of detection reactions are also feasible with the aid of the micro-array.

The term "substrate" as used herein is a broad term and is to be given its ordinary and customary meaning to a person of ordinary skill in the art and is not to be limited to a special or customized meaning. The term specifically may refer, without limitation, to an arbitrary element designed to carry one or more other elements or items disposed thereon or therein. Particularly, the substrate may be a planar substrate, specifically a planar substrate having at least one flat surface. The elements disposed on the substrate may comprise the micro-array. The substrate may, specifically, have at least one of a round shape, a square shape or an elongated shape, such as a strip shape, a rectangular shape, and oval shape or a bar shape. However, other kinds of shapes may also be feasible. By way of example, the substrate may be a solid substrate, such as a glass slide and/or a silicon substrate. As an example, the substrate may comprise a microscope slide. However, other substrates, for example flexible substrates, are also feasible. The substrate may be a transparent substrate, such as an optically transparent substrate having a non-zero transmittance for electromagnetic radiation in one or more of an infrared range, a visible range and an ultraviolet (UV) range. The substrate may be a passive substrate, such as a glass slide, or an active substrate, such as a substrate comprising integrated electronics and/or micromechanical elements.

The term "image" as used herein is a broad term and is to be given its ordinary and customary meaning to a person of ordinary skill in the art and is not to be limited to a special or customized meaning. The term specifically may refer, without limitation, to data recorded by using a camera, such as a plurality of electronic readings from an imaging device, such as pixels of a camera chip. The image itself, thus, may comprise pixels, the pixels of the image correlating to pixels of the camera chip. Consequently, when referring to "pixels", reference is either made to the units of image information generated by the single pixels of the camera chip or to the single pixels of the camera chip directly. The image may comprise raw pixel data. For example, the image may comprise data in a RGB space, grayscale intensity data, single color data from one of R, G or B pixels, a Bayer pattern image or the like. The image may comprise evaluated pixel data such as a full-color image or an RGB image.

The term "microscopic fluorescence image" as used herein is a broad term and is to be given its ordinary and customary meaning to a person of ordinary skill in the art and is not to be limited to a special or customized meaning. The term specifically may refer, without limitation, to an image obtained by recording at least partially fluorescence light, specifically by using a microscope having a magnification greater than one. The microscopic fluorescence image may specifically record the fluorescence of the micro-array. Thus, specifically, the microscopic fluorescence image may be obtained by inducing fluorescence of the micro-array with a light source, for example with at least one laser light source, and by recording the induced fluorescence of the micro-array. Generally, an order of magnitude of the regular pattern of the micro-array may be in a sub-mm range. As an example, neighboring items of the micro-array may be separated by less than 5 mm, specifically by less than 2 mm or even by less than 1 mm. The image, specifically the microscopic fluorescence image, may be recorded by using a microscope or any other lens system configured for providing suitable magnification. The method may specifically be performed with microscopic fluorescence images. However, other images, such as bright-field microscopic images, are also feasible, in principle. Further, when using the term "microscopic fluorescence image", the raw data of the image may be used. Additionally or alternatively, however, preprocessed or processed image data may also be used, such as filtered image data or the like. Thus, the method may comprise pre-processing steps, such as inverting colors of the bright-field microscopic image.

The term "evaluating" as used herein is a broad term and is to be given its ordinary and customary meaning to a person of ordinary skill in the art and is not to be limited to a special or customized meaning. The term specifically may refer, without limitation, to a processing of data, specifically image data, and deriving at least one result, such as a representative result, specifically at least one item of information on the data and/or on at least one object described by the data, therefrom. Thus, the method of evaluating the image of the micro-array may comprise one or more method steps of processing the image such that the at least one representative result, specifically at least one representative result and/or at least one item of information on the micro-array, can be derived from the processed image.

The term "computer-implemented method" as used herein is a broad term and is to be given its ordinary and customary meaning to a person of ordinary skill in the art and is not to be limited to a special or customized meaning. The term specifically may refer, without limitation, to a method involving at least one data processing means, such as a computer or a computer network. The data processing means may comprise at least one processor which is configured for performing at least one of the method steps of the method according to the present invention. Preferably, each of the method steps is performed by the data processing means. The method may be performed completely automatically, specifically without user interaction. Further aspects of the computer-implementation are outlined in further detail below.

The method comprises the following steps, which, as an example, may be performed in the given order. It shall be noted, however, that a different order is also possible. Further, it is possible to perform one or more of the method steps once or repeatedly. Further, it is possible to perform two or more of the method steps simultaneously or in a timely overlapping fashion. The method may comprise further method steps which are not listed.

The method comprises:
i. at least one retrieving step, comprising retrieving the at least one image and retrieving at least one set of deposition data comprising information on a deposition of spots of the micro-array on the substrate;
ii. at least one pattern recognition step for automatically detecting a printing pattern of the micro-array in the image, comprising
   ii. 1. generating a set of test patterns comprising a plurality of test patterns, by using the set of deposition data,
   ii.2. comparing the set of test patterns with information retrieved from the image, and
   ii.3. generating an estimate printing pattern in accordance with a degree of congruence of the test patterns with the image, the estimate printing pattern having a pattern of grid points;
iii. at least one dividing step, comprising automatically selecting sub-images of the image in accordance with the grid points of the estimate printing pattern; and
iv. at least one segmentation step, comprising automatically segmenting spots of the printing pattern in the sub-images.

The term "retrieving" as used herein is a broad term and is to be given its ordinary and customary meaning to a person of ordinary skill in the art and is not to be limited to a special or customized meaning. The term specifically may refer, without limitation, to a process of at least one of actively acquiring and passively obtaining at least one item of information and/or data. For example, actively acquiring information may comprise querying, requesting, measuring and/or reading information by the data processing means, for example the computer, performing the computer-implemented method from or in a data storage device, such as in a database of a data storage device. For example, passively obtaining information may comprise obtaining information sent to the data processing means, for example to the computer, performing the computer-implemented method. Thus, in the retrieving step i., information, specifically the image and the set of deposition data, may be actively and/or passively retrieved by the data processing means, for example the computer, performing the computer-implemented method. One or both of the image and the set of deposition data may be actively and/or passively retrieved. For example, the retrieving step i. may comprise actively and/or passively retrieving the set of deposition data and/or the at least one image, such as from at least one of a database, a data storage device and a data network.

The term "set of deposition data" as used herein is a broad term and is to be given its ordinary and customary meaning to a person of ordinary skill in the art and is not to be limited to a special or customized meaning. The term specifically may refer, without limitation, to information on a deposition of spots of the micro-array on the substrate. Specifically, the set of deposition data may comprise information about the regular pattern of the items of the micro-array on the substrate. Specifically, the set of deposition data may comprise information on deposition coordinates and/or information from which the deposition coordinates may be derived. The term "deposition", as used herein, may refer, without limitation, to an application of the items of the micro-array on the substrate, specifically on the surface of the substrate. As an example, deposition may comprise a deposition by at least one of printing, such as micro printing, pipetting, such as micro pipetting, drop dispensing, inkjet printing, needle deposition or other types of deposition, specifically from the liquid phase, onto the substrate.

The term "spots", as used herein, may refer, without limitation, to a detectable amount of the items of the micro-array on the substrate, such as a visible amount and/or an amount detectable by other means such as fluorescence. When the items are deposited on the substrate, an amount of each of the items may be deposited by one or more of the above-mentioned and/or other deposition techniques, thereby generating the spots on the substrate, wherein the spots may be located in a pattern defining the pattern of the micro-array. Consequently, when referring to a "spot", reference is either made to the item of the micro-array itself or to a spatial location of the item in the micro-array on the substrate. The spot may comprise exactly one item of the micro-array. However, alternatively, the spot may refer to a group of at least two items, for example of similar items, of the micro-array on the substrate.

By way of example, the spots, specifically the items, of the micro-array may be deposited on the substrate, specifically on the surface of the substrate, using robotic micro-pipetting, micro-printing or the like. The deposition of the spots may at least partially be performed automatically, such as by computer-control and, in particular, without user interaction. Thus, the spots of the micro-array may be deposited on the substrate according to given input data. For example, the set of deposition data may comprise at least one printing file containing information on printing positions of the spots of the micro-array. The set of deposition data may comprise information on at least one of: a number of blocks of spots in the micro-array; a number of spots per block in a horizontal direction in the micro-array; a number of spots per block in a vertical direction in the micro-array; a distance between neighboring spots in a horizontal direction in the micro-array; a distance between neighboring spots in a vertical direction in the micro-array; at least one position information of at least one block of the micro-array; identification information on at least one of the spots of the micro-array; information on at least one component of at least one substance deposited in at least one of the spots of the micro-array; position of at least one of the spots of the micro-array. For example, the set of deposition data may comprise at least one GenePix^{®} Array List file (GAL). Other formats of deposition data, however, are also feasible and may be used within the present invention.

As outlined above, the method comprises the least one pattern recognition step ii. for automatically detecting the printing pattern of the micro-array in the image. The term "pattern recognition" as used herein is a broad term and is to be given its ordinary and customary meaning to a person of ordinary skill in the art and is not to be limited to a special or customized meaning. The term specifically may refer, without limitation, to a process of automatically detecting patterns and/or regularities in data, specifically image data. The pattern recognition step ii. may comprise detecting patterns and/or regularities in the image of the micro-array. The automatic detection of the pattern may be performed completely by means of at least one computer and/or computer network and/or machine, in particular without manual action and/or interaction with a user. In the pattern recognition step ii., specifically, a printing pattern may be detected in the image of the micro-array.

The term "printing pattern" as used herein is a broad term and is to be given its ordinary and customary meaning to a person of ordinary skill in the art and is not to be limited to a special or customized meaning. The term specifically may refer, without limitation, to the regular pattern of the spots of the micro-array as deposited on the substrate. Specifically, the printing pattern may be the regular pattern of spots of the micro-array as printed on the substrate. The printing pattern may comprise information on a spatial location of the printed spots of the micro-array, specifically information on a spatial location of the printed spots of the micro-array on the substrate. The printing pattern may deviate from an ideal pattern as defined by the set of deposition data, e.g. due to tolerances of deposition. The printing pattern may account for this deviation from the ideal pattern, e.g. by describing the real pattern of deposition. Thus, the printing pattern may also be referred to as "real pattern" or "true pattern", whereas the set of deposition data may describe the "desired pattern" or "nominal pattern".

As outlined above, the pattern recognition step ii. comprises generating the set of test patterns comprising the plurality of test patterns, by using the set of deposition data, specifically according to the set of deposition data. The term "test pattern" as used herein is a broad term and is to be given its ordinary and customary meaning to a person of ordinary skill in the art and is not to be limited to a special or customized meaning. The term specifically may refer, without limitation, to a reconstructed or simulated pattern of the spots of the micro-array. The test pattern may be reconstructed or simulated considering the set of deposition data. The test patterns may be generated by directly using the set of deposition data. Alternatively or additionally, the test patterns may be generated by indirectly using the set of deposition data. For example, the set of deposition data, specifically the information comprised by the set of deposition data, may be transformed, for example by rotating, translating and/or scaling the set of deposition data, wherein, for generating the test patterns, the transformed set of deposition data may be used. Each test pattern of the set of test patterns may specifically be generated using a differently transformed set of deposition data. As an example, the set of test patterns may comprise a plurality of test patterns using variations of the set of deposition data, such as in order to simulate different types and/or different degrees of deviation of the "true pattern", defined by the respective test pattern, from the "nominal pattern", as defined by the set of deposition data. These types and/or degrees of deviation may account for, as an example, deviations in at least one of spatial positioning, offset, spacing between the spots, rotation of the patterns or the like. Examples will be given in further detail below.

For example, step ii. 1. may comprise generating the test patterns by using the set of deposition data and by using additional transformation parameters, such as transformation patterns describing different types and/or degrees of deviation of the "true pattern", defined by the respective test pattern, from the "nominal pattern", as defined by the set of deposition data. The test patterns of the set of test patterns may be generated by using different transformation parameters. The transformation parameters may comprise at least one item of information on: a scaling in at least one dimension; a rotational angle; an offset in at least one dimension. In step ii.1., the set of test patterns may specifically be generated by providing a set of different transformation parameters and by generating the patterns for the different transformation parameters.

As outlined above, the pattern recognition step ii. further comprises comparing the set of test patterns with information retrieved from the image. The term "information retrieved from the image" as used herein is a broad term and is to be given its ordinary and customary meaning to a person of ordinary skill in the art and is not to be limited to a special or customized meaning. The term specifically may refer, without limitation, to an arbitrary item of information derived from image data, such as the image itself and/or at least one item of secondary information obtained from the image, such as a processed image or the like. For example, the information retrieved from the image may comprise intensity information for each pixel in the image. The comparing of the information retrieved from the image with the set of test patterns may comprise directly comparing the set of test patterns with the image or, alternatively or additionally, comparing the test pattern with a secondary image derived from the image. The secondary image may specifically comprise at least one transformed, processed and/or adjusted image. Step ii.2. may specifically comprise comparing the information retrieved from the image with each of the test patterns of the set of test patterns, each test pattern having preferably different transformation parameters.

The term "comparing" as used herein is a broad term and is to be given its ordinary and customary meaning to a person of ordinary skill in the art and is not to be limited to a special or customized meaning. The term specifically may refer, without limitation, to a process of generating at least one item of information on a degree of similarity between at least two objects. Therein, various types of comparisons are known to the skilled person and may be used in this context, in an isolated fashion or in combination. Thus, various types of correlation algorithms may be used.

Thus, for example, the comparing of the set of test patterns with information retrieved from the image in step ii.2. may comprise using at least one correlation algorithm. The correlation algorithm may determine a direct correlation between each of the test patterns with information retrieved from the image, such as in position space. However, the at least one correlation algorithm may also be performed in frequency space. Thus, the correlation algorithm may comprise at least one correlation of Fourier-transforms, e.g. by comparing Fourier-transforms of the test patterns of the set of test pattern with at least one item of information derived from a Fourier-transform of the image. Thus, in this example, the information retrieved from the image may comprise a Fourier-transform of the image and/or at least one item of information derived from the Fourier-transform of the image. The correlation algorithm may specifically rely on the convolutional theorem, i.e. comprises multiplying the Fourier-transform of the image with the Fourier-transforms of the test patterns of the set of test patterns, specifically with the Fourier-transform of an image of a test micro-array. The correlation of Fourier-transforms may provide a fast procedure of comparing the set of test patterns with the information retrieved from the image, since, due to the convolutional theorem, correlations of functions in position space are transformed into simple multiplications of the Fourier-transforms of the functions in frequency space. Thereby, time- and resource-consuming correlation operations may be avoided and replaced by multiplication operation. However, in principle, correlating the set of test patterns with the information retrieved in the image may also be possible in the position space, real space or coordinate space.

The comparing of the set of test patterns with information retrieved from the image in step ii.2. may, additionally or alternatively, comprise applying at least one sharpening process to the correlated image, specifically at least one sharpening process comprising applying at least one high-pass filter to the correlated image. The term "sharpening process" as used herein is a broad term and is to be given its ordinary and customary meaning to a person of ordinary skill in the art and is not to be limited to a special or customized meaning. The term specifically may refer, without limitation, to a process of at least partially enhancing contrast in image data. The sharpening process may enhance at least partially contrast in the correlated image, specifically around grid points of the estimate printing pattern in the correlated image. Thus, as an example, the contrast in the correlated image may be enhanced around the grid points of the estimate printing pattern, thereby obtaining an sharpened image. With the sharpening process, artifacts in the image may be reduced and/or removed. Specifically, artifacts associated with a background of the image may be reduced and/or removed. The sharpening process may comprise applying the at least one high-pass filter. Additionally or alternatively, the sharpening process may comprise an additional correlation, specifically comprising correlating the correlated image with an additional kernel to enhance contrast around grid points. Additionally or alternatively, the sharpening process may comprise locally enhancing contrast in the correlated image, specifically enhancing contrast around grid points of the estimate printing pattern in the correlated image. Thus, generally, the sharpening process specifically may comprise at least one process selected from the group consisting of: applying a high-pass filter to the correlated image; applying an additional correlating algorithm to the correlated image, specifically comprising correlating the correlated image with an additional kernel to enhance contrast around grid points; a process of locally enhancing contrast in the correlated image.

The sharpening process, for example the application of the high pass filter, may enable suppression of background and, thus, may enhance robustness of the pattern recognition step ii. and/or may enhance accuracy of the method and may reduce background noise, as will be outlined by exemplary embodiments below.

As outlined above, the pattern recognition step ii. further comprises generating the estimate printing pattern in accordance with the degree of congruence of the test patterns with the image, the estimate printing pattern having the pattern of grid points. The term "estimate printing pattern" as used herein is a broad term and is to be given its ordinary and customary meaning to a person of ordinary skill in the art and is not to be limited to a special or customized meaning. The term specifically may refer, without limitation, to an approximation of the printing pattern. Thus, the estimate printing pattern represents a best guess or educated guess of the real printing pattern on the substrate. Specifically, the estimate printing pattern may comprise an estimated or approximated pattern of the positions of the spots of the micro-array as deposited on the substrate. The estimate printing pattern may specifically comprise estimate locations of the spots of the micro-array in the image. The estimate locations of the spots of the micro-array may provide the pattern of grid points of the estimate printing pattern. As used herein, the term "grid point" may refer, without limitation, to a position and/or a spatial index of a point of the plurality of points defining the pattern. The grid point may be a spatial index of the spots in the estimate printing pattern. Specifically, for the estimate printing pattern, the grid point may be an estimation of a spatial location of the spots of the micro-array in the image. The pattern of grid points may be generated by selecting a test pattern of the set of test patterns or, alternatively, by inter- or extrapolating between two or more test patterns of the set of test patterns. For the selection and/or the inter- or extrapolation, suitable test patterns may be selected in accordance with their degree of congruence. For generating the estimate printing pattern, test patterns with a high degree of congruence with the image may be preferred over test patterns with a low degree of congruence.

The term "degree of congruence" as used herein is a broad term and is to be given its ordinary and customary meaning to a person of ordinary skill in the art and is not to be limited to a special or customized meaning. The term specifically may refer, without limitation, to a quantitative measure on a congruence of at least two objects. Specifically, the degree of congruence may be a quantitative measure on the congruence of the image, specifically the information retrieved from the image, with the set of test patterns. For example, the degree of congruence may comprise an intensity of a correlation of the image with the set of test patterns, specifically of a correlation of the information retrieved from the image correlated with the set of test patterns. It may be possible to determine a maximum, such as a global maximum and/or a local maximum, of the degree of congruence. Thus, it may be possible to determine a maximum intensity in the correlated image. Thus, by quantifying the degree of congruence and determining a global and/or local maximum, a best match of one of the test patterns of the set of test patterns with the image, specifically with the information retrieved from the image, of the micro-array may be determined.

Further, in step ii.3., the estimate printing pattern may be selected by using the set of test patterns, such that the estimate printing pattern has a best match with the image, for example by selecting the estimate printing pattern from the set of test patterns and/or by inter- or extrapolating the test patterns in order to generate the estimate printing pattern having the best match. Consequently, the estimate printing pattern may be one of the test patterns of the set of test patterns, or may also be a different pattern which is derived from the set of test patterns, e.g. by interpolating between at least two test patterns from the set of test patterns and/or extrapolating from the test pattern.

Additionally or alternatively, the test patterns may comprise a pattern of test grid points. Step ii.1. may comprise a dilation of the test grid points, thereby generating an image of a test micro-array. The degree of congruence may be determined by comparing the image of the test micro-array with the image. Generating the image of the test micro-array may further comprise a smoothing of the dilated test grid points. For example, step ii.1. may comprise constructing an artificial image of a test micro-array image, which may specifically provide the test pattern, by an expansion of single pixel points forming the printing pattern by means of a dilation and a Gaussian smoothing.

The pattern recognition step ii. may comprise at least one global pattern recognition step for detecting the entire printing pattern of the micro-array in the image. Thus, the global pattern recognition step may comprise the application of the above-mentioned steps of the pattern recognition step ii. to the entire image and/or the entire set of deposition data. Besides the global pattern recognition step, the pattern recognition step may additionally comprise at least one partial pattern recognition and correction step for correcting the estimate printing pattern of the micro-array resulting from the global pattern recognition step for at least one sub-set of the set of deposition data. The set of deposition data may specifically comprise a plurality of identical blocks, each block having a sub-set of the spots of the micro-array. The blocks may be deposited on the substrate in a block pattern, specifically in a block pattern with the blocks being deposited in a shifted and/or an adjacent fashion. The partial pattern recognition and correction step may comprise selecting sub-images of the image around the grid points of the estimate printing pattern, determining a center of intensity in the sub-images and determining a deviation of the center of intensity in the sub-images from the grid points of the estimate printing pattern. The partial pattern recognition and correction step may comprise correcting the estimate printing pattern by using the deviation of the center of intensity in the sub-images and the grid points of the estimate printing pattern.

As outlined above, the method further comprises the at least one dividing step iii., comprising automatically selecting sub-images of the image in accordance with the grid points of the estimate printing pattern. The term "selecting" as used herein is a broad term and is to be given its ordinary and customary meaning to a person of ordinary skill in the art and is not to be limited to a special or customized meaning. The term specifically may refer, without limitation, to a process of separating or partitioning image data into multiple segments. Specifically, the selecting may comprise separating image data from the image of the micro-array. The selecting may be performed completely automatically, such as by means of at least one computer and/or computer network and/or machine, in particular without manual action and/or interaction with a user. The selecting may comprise separating sectional image data from the image of the micro-array. Consequently, the term "sub-image", as used herein, may refer, without limitation, to sectional image data. Specifically, the sub-image may comprise a section of image data from the image of the micro-array. The sub-images may comprise sub-information of the image around the grid points of the estimate printing pattern, such as original image data or information retrieved from the original image. For example, the dividing step iii. may comprise selecting one sub-image per grid point of the estimate printing pattern. For example, the dividing step iii. may comprise selecting one sub-image per group of grid points of the estimate printing pattern. For example, the dividing step iii. may comprise selecting one sub-image per block of grid points of the estimate printing pattern. Specifically, the dividing step iii. may comprise selecting one sub-image of the image for each grid point of the estimate printing pattern, for each group of grid points of the estimate printing pattern and/or for each block of grid points of the estimate printing pattern.

Further, the dividing step iii. may comprise selecting the sub-images such that the grid points, the group of grid points and/or the block of grid points of the estimate printing pattern are centered within their respective sub-images. The sub-images of the dividing step iii. may be selected from the group consisting of: polygonal sub-images; rectangular sub-images, specifically square sub-images; honeycomb-shaped sub-images; oval sub-images, specifically elliptical sub-images.

As outlined above, the method further comprises the at least one segmentation step, comprising automatically segmenting spots of the printing pattern in the sub-images. The term "segmenting" as used herein is a broad term and is to be given its ordinary and customary meaning to a person of ordinary skill in the art and is not to be limited to a special or customized meaning. The term specifically may refer, without limitation, to a process of locating objects and/or boundaries of objects in an image or, specifically, as in the present case, in a sub-image. Specifically, the segmenting may comprise locating the spots of the printing pattern in the sub-images. The spots may be segmented, as an example, by means of separating the intensity belonging to the spot from the background of the sub-image. The segmenting may specifically be an automatic process comprising using the sub-images selected in the dividing step iii. as an input, processing the sub-images and providing segmented spots as an output. Thus, a result of the segmentation step iv. may be or may comprise segmented spots, specifically segmented spots for each grid point of the printing pattern.

It shall be noted that the entire sub-process of the segmentation step iv. may, in principle, also be performed without the specific preceding steps i.-iii. as described above. Thus, in principle, method step iv. as described herein as and described in the following, specifically is disclosed in the context of the disclosure of the remaining steps of the method, specifically of steps i.-iii.. As outlined in further detail below, this combination of steps i.-iii. with step iv. is specifically efficient and may lead to a highly automated and highly precise evaluation of the image, specifically a highly automated and highly precise detection of the micro-array in the image. However, step iv. may also be separated from the remaining process. Thus, the segmentation step iv. may also be performed by using the image, a given printing pattern and a given set of sub-images, wherein the given printing pattern and the given set of sub-images are generated by other means than the ones described in steps i.-iii. of the present method. Thus, as an example, the given printing pattern may directly be derived from the set of deposition data and/or may be predetermined by a user, e.g. by visual inspection of the image, and the set of sub-images may either be automatically derived from the image in accordance with step iii. as described above and/or may be generated by other means, such as manually by a user by defining sub-images, e.g. in accordance with the given printing pattern. Consequently, step iv. may comprise, as an alternative to steps i.-iii. as described herein, e.g. as described above and/or as described in further detail below, at least one step of providing the at least one image, providing a printing pattern and either providing the sub-images or deriving the sub-images from the image by using the printing pattern. The remaining aspects and embodiments of step iv. may be asked described herein, such as described above and/or as described in the following.

The segmentation step iv. specifically may comprise geodesic dilation of the sub-images. The term "geodesic dilation" as used herein is a broad term and is to be given its ordinary and customary meaning to a person of ordinary skill in the art and is not to be limited to a special or customized meaning. The term specifically may refer, without limitation, to an image processing operation of using a structural element for probing and expanding shapes in an input image. The geodesic dilation of the sub-images may comprise using processed sub-images, specifically marker images, and at least one image mask. Thus, in this example, the geodesic dilation may use the image mask as the structural element for probing and expanding shapes in the processed sub-image, specifically in the marker image. The image mask may specifically be a spot-specific image mask. Thus, for each spot of the micro-array, at least one image mask may be generated around the grid points of the estimate printing pattern.

A processing of the sub-images in step iv. specifically may comprise:
iv. 1. at least one morphological opening of the sub-images,
iv.2. at least one filtering of the opened sub-images, specifically by using a median filter,
iv.3. Gauss-masking the filtered sub-images of step iv.2., and
iv.4. binarizing the masked sub-images of step iv.3.,
thereby obtaining the processed sub-images, specifically the marker images.

The term "morphological opening" as used herein is a broad term and is to be given its ordinary and customary meaning to a person of ordinary skill in the art and is not to be limited to a special or customized meaning. The term specifically may refer, without limitation, to an image processing operation comprising a combination of a geodesic dilation on an erosion of an input image by using the same structural element. As used herein, the term "erosion" may refer, without limitation, to an image processing operation of using a structural element for probing and reducing shapes in an input image.

For example, the binarizing may be performed by using a threshold method, specifically a threshold selected from the group consisting of: an absolute threshold; a relative threshold, specifically a relative threshold being dependent on a quantile intensity in the sub-image, e.g. a maximum intensity in the sub-image. The binarizing may specifically comprises setting pixels in the masked sub-image having an intensity above the threshold to a certain value, for example 1, and setting pixels in the masked sub-image having an intensity equal or below the threshold to a certain value, for example 0. For example, the threshold for binarizing the masked sub-image of step iv.3. may be determined such that only 0.5 % of the pixel in the image with highest intensity are set to 1.

Step iv. may further comprise generating the at least one image mask for evaluating the image of the micro-array. The generating of the at least one image mask comprises binarizing the sub-images, specifically binarizing Gaussian-filtered sub-images. The binarizing may be performed by using a threshold method, specifically a threshold selected from the group consisting of: an absolute threshold; a relative threshold, specifically a relative threshold being dependent on a minimum of a mean intensity in the sub-image and a mean intensity in the image. For example, the relative threshold may be a minimum of a mean intensity in the sub-image and a mean intensity of a corresponding block in the image. The generating of the at least one image mask may further comprise filtering the binary sub-images, specifically by using a median filter.

Specifically, the generating of the at least one image mask may comprise:
iv.a. multiplying the sub-images with an image of Gaussian-distributed intensity,
iv.b. binarizing the sub-images generated in step iv.a., and
iv.c. filtering the binary images of step iv.b. with a median-filter.

Further, step iv. may comprise at least one morphological closing of the geodesic dilated sub-images. The term "morphological closing" as used herein is a broad term and is to be given its ordinary and customary meaning to a person of ordinary skill in the art and is not to be limited to a special or customized meaning. The term specifically may refer, without limitation, to an image processing operation comprising a combination of an erosion on a geodesic dilation of an input image by using the same structural element.

Further, step iv. may comprise selecting the sub-images considering at least one characteristic of the segmented spots selected from the group consisting of: a minimum intensity; a distance of the spot to an sub-image center; a circularity; a solidity; a bounding disk coverage.

Alternatively or additionally, step iv. generally may comprise one or more of the following steps:
- at least one morphological opening of the sub-images;
- at least one filtering the sub-images, specifically by using a median filter;
- Gauss-masking the sub-images;
- binarizing the sub-images, wherein the binarizing may specifically be performed by using a threshold method, specifically a threshold selected from the group consisting of: an absolute threshold; a relative threshold;
- multiplying the sub-images with an image of Gaussian-distributed intensity;
- binarizing the sub-images; and
- filtering the sub-images with a median-filter.

In a further aspect of the present invention, an image evaluation system for evaluating the at least one image of the at least one micro-array on the substrate, specifically of the at least one microscopic fluorescence image of the micro-array, is disclosed.

The term "system" as used herein is a broad term and is to be given its ordinary and customary meaning to a person of ordinary skill in the art and is not to be limited to a special or customized meaning. The term specifically may refer, without limitation, to an arbitrary set of interacting or interdependent components parts forming a whole. Specifically, the components may interact with each other in order to fulfill at least one common function. The system may comprise at least two components, wherein the at least two components may be handled independently or may be coupled or connectable. Consequently, the term "image evaluation system", as used herein, may refer, without limitation, to a system configured for performing at least one image evaluation function. The image evaluation system may be configured for performing the evaluation function on image data, such as with the image of the microarray, specifically with the microscopic fluorescence image of the micro-array. Specifically, the image evaluation system may be configured for performing the method of evaluating the at least one image of the at least one micro-array on the substrate according to the present invention, such as according to any one of the embodiments disclosed above and/or according to any one the embodiments disclosed in further detail below. Thus, for details, options and definitions with regard to the image evaluation system, reference may be made to the description of the method as discussed above.

The image evaluation system comprises:
I. at least one retrieving unit configured for retrieving the at least one image and for retrieving the at least one set of deposition data comprising information on the deposition of spots of the micro-array on the substrate;
II. at least one pattern recognition unit configured for automatically detecting the printing pattern of the micro-array in the image, the detecting comprising the steps of
   iv.1. generating the set of test patterns comprising the plurality of test patterns by using the set of deposition data,
   iv.2. comparing the set of test patterns with information retrieved from the image, and
   iv.3. generating the estimate printing pattern in accordance with the degree of congruence of the test patterns with the image, the estimate printing pattern having the pattern of grid points;
III. at least one dividing unit configured for automatically selecting sub-images of the image in accordance with the grid points of the estimate printing pattern; and
IV. at least one segmentation unit configured for automatically segmenting spots of the printing pattern in the sub-images.

The units I. to IV. may be performed by separate units, such as separate units having separate processors or processing units. However, these units may also fully or partially be grouped or integrated, by grouping or integrating two or more or even all of these units into at least one single unit, such as a single processor or processing unit. The processor or processing unit may be configured for performing the functions as mentioned by appropriate software programming.

The term "retrieving unit" as used herein is a broad term and is to be given its ordinary and customary meaning to a person of ordinary skill in the art and is not to be limited to a special or customized meaning. The term specifically may refer, without limitation, to an arbitrary computing or data processing unit configured for performing the retrieving step i. as defined above. The retrieving unit may be a single computing or data processing unit, or, alternatively, may comprise multiple computing or data processing units, which specifically may be embodied in one single device or may be distributed in a computational network.

The term "pattern recognition unit" as used herein is a broad term and is to be given its ordinary and customary meaning to a person of ordinary skill in the art and is not to be limited to a special or customized meaning. The term specifically may refer, without limitation, to an arbitrary computing or data processing unit configured for performing the pattern recognition step ii. as defined above. The pattern recognition unit may be a single computing or data processing unit, or, alternatively, may comprise multiple computing or data processing units, which specifically may be embodied in one single device or may be distributed in a computational network.

The term "dividing unit" as used herein is a broad term and is to be given its ordinary and customary meaning to a person of ordinary skill in the art and is not to be limited to a special or customized meaning. The term specifically may refer, without limitation, to an arbitrary computing or data processing unit configured for performing the dividing step iii. as defined above. The dividing unit may be a single computing or data processing unit, or, alternatively, may comprise multiple computing or data processing units, which specifically may be embodied in one single device or may be distributed in a computational network.

The term "segmentation unit" as used herein is a broad term and is to be given its ordinary and customary meaning to a person of ordinary skill in the art and is not to be limited to a special or customized meaning. The term specifically may refer, without limitation, to an arbitrary computing or data processing unit configured for performing the segmentation step iv. as defined above. The segmentation unit may be a single computing or data processing unit, or, alternatively, may comprise multiple computing or data processing units, which specifically may be embodied in one single device or may be distributed in a computational network.

The image evaluation system specifically may be configured, e.g. by programming, for performing the method as disclosed herein, such as the method as disclosed in any one of the embodiments described above and/or the method according to any one of the embodiments described in further detail below.

As outlined above, the retrieving unit, the pattern recognition unit, the dividing unit and the segmentation unit may be at least partially embodied by at least one processor of the image evaluation system. The term "processor" as used herein is a broad term and is to be given its ordinary and customary meaning to a person of ordinary skill in the art and is not to be limited to a special or customized meaning. The term specifically may refer, without limitation, to an arbitrary logic circuitry configured for performing basic operations of a computer or system, and/or, generally, to a device which is configured for performing calculations or logic operations. In particular, the processor may be configured for processing basic instructions that drive the computer or system. As an example, the processor may comprise at least one arithmetic logic unit (ALU), at least one floating-point unit (FPU), such as a math co-processor or a numeric co-processor, a plurality of registers, specifically registers configured for supplying operands to the ALU and storing results of operations, and a memory, such as an L1 and L2 cache memory. In particular, the processor may be a multi-core processor. Specifically, the processor may be or may comprise a central processing unit (CPU). Additionally or alternatively, the processor may be or may comprise a microprocessor, thus specifically the processor's elements may be contained in one single integrated circuitry (IC) chip. Additionally or alternatively, the processor may be or may comprise one or more application-specific integrated circuits (ASICs) and/or one or more field-programmable gate arrays (FPGAs) and/or one or more tensor processing unit (TPU) and/or one or more chip, such as a dedicated machine learning optimized chip, or the like. The processor specifically may be configured, such as by software programming, for performing one or more evaluation operations, for example one or operations of retrieving the image and the set of deposition data, automatically detecting the printing pattern of the micro-array in the image, automatically selecting sub-images and automatically segmenting spots of the printing pattern, respectively.

In a further aspect of the present invention, a computer program is disclosed comprising instructions which, when the program is executed by a computer, cause the computer to perform the method according to the present invention, such as according to any one of the embodiments disclosed above and/or according to any one of the embodiments disclosed in further detail below.

Thus, specifically, one, more than one or even all of method steps i. to iv., specifically including steps ii.1. to ii.3, as indicated above may be performed by using a computer or a computer network, preferably by using a computer program.

Referring to the computer-implemented aspects of the invention, one or more of the method steps or even all of the method steps of the method according to one or more of the embodiments disclosed herein may be performed by using a computer or computer network. Thus, generally, any of the method steps including provision and/or manipulation of data may be performed by using a computer or computer network. Generally, these method steps may include any of the method steps, typically except for method steps requiring manual work, such as providing the samples and/or certain aspects of performing the actual measurements.

In a further aspect of the present invention, a computer-readable storage medium is disclosed comprising instructions which, when executed by a computer, cause the computer to perform the method according to the present invention, such as according to any one of the embodiments disclosed above and/or according to any one of the embodiments disclosed in further detail below.

As used herein, the term "computer-readable storage medium" specifically may refer to non-transitory data storage means, such as a hardware storage medium having stored thereon computer-executable instructions. The computer-readable data carrier or storage medium specifically may be or may comprise a storage medium such as a random-access memory (RAM) and/or a read-only memory (ROM).

The method and the system according to the present invention may provide a large number of advantages over known methods and devices. Specifically, the method and the system according to the present invention may provide a robust and fully automatic procedure of evaluating images of micro-arrays, in particular of images with low signal intensity and/or sparely occupied images. Further, by correlating the image with the set of test patterns in the Fourier-space, the method may be efficient with regard to a necessary computing power. Thus, the method may be performed completely automatically within a few minutes, which may provide substantial time savings, specifically in view of known methods relying at least partially on manual assistance and/or manual analysis. Consequently, the method and the system according to the present invention may improve accuracy and significance of the evaluation of images of micro-arrays due to its complete automatic performance.

The method may specifically comprise retrieving the image of the micro-array and the set of deposition data, for example via a GAL-file, the set of deposition data specifically comprising information on the micro-array, more specifically on the printing pattern of the micro-array. For example, the set of deposition data may comprise a number of blocks comprised by the micro-array, a number of spots in a block in a horizontal direction, a number of spots in a block in a vertical direction, a distance between the spots in the horizontal direction, a distance between the spots in the vertical direction, coordinates of the blocks in absolute values, for example in µm, and/or further information on the specific spots, such as name, identification number, annotation, location of the spots within its block, etc.. These information comprised by the set of deposition data may specifically be provided in absolute values corresponding to a size of the micro-array, for example in µm. The method may further comprise a scaling of the set of test patterns as provided by the set of deposition data, for example by using a scaling factor determined by using metadata of the image and/or a scaling factor being provided by user input, in order to compare the test patterns with the image.

The method may further comprise, specifically after retrieving the image and the set of deposition data, the pattern recognition step. The set of test patterns are generated by using the set of deposition data. For detecting the printing pattern of the micro-array in the image, transformation parameters, such as a rotation angle, an offset, a scaling factor, specifically a scaling factor for scaling distances between the spots, may have to be determined.

An estimation of the transformation parameters may be provided by user input. The method may specifically comprise a brute-force-method for detecting the printing pattern in the image. A number of test patterns of the set of test patterns may be determined in accordance with a given accuracy to be achieved. A computational time of the pattern recognitions step ii. may increase with the number of test patterns. The offset of the printing pattern may be determined at a later stage of the method.

For each of the test patterns of the set of test patterns, an image of a test micro-array may be generated. To this end, coordinates from the spots comprised by the set of deposition data may be rotated and/or scaled and/or transformed to a coordinate system of the image of the micro-array. The image of the test micro-array may comprise a pattern of test grid points which may be dilated and smoothed by using a Gaussian smoothing. The images of the test micro-array may provide a kernel to be correlated with the image of the micro-array. The correlation may comprise a Fourier-transformation. Specifically, the correlation may comprise multiplying a Fourier-transformed of the image of the micro-array with a Fourier-transformed of the image of the test micro-array. The correlation of Fourier-transforms may specifically provide an efficient way of correlation since a size of the kernel would require a CPU-intense correlation in the coordinate space. After the correlation of the Fourier-transforms, the correlated image may be re-transformed and a sharpening process may be applied, such as by applying a high-pass filter. The sharpening process, specifically the high pass filter, may provide a suppression of the background and, thus, enhance a robustness of the method. As outlined above, as an alternative or in addition to the high-pass filter, one or more other sharpening processes may be applied, such as an additional correlation or a local enhancement of the contrast.

The estimate printing pattern may be selected from the set of test patterns in accordance with an absolute maximum in intensity of the correlated images corresponding to the selected test pattern. By assigning the test pattern to the correlated image of maximum intensity, the best degree of congruence of the test pattern with the image may be determinable, specifically comprising the best match of rotation and/or scaling of the test pattern. An offset or a translation may be determined by a location of a spot of maximum intensity in the correlated image.

The estimate printing pattern, specifically together with the image of the micro-array, may be provided visually to an user of the method. The user may validate and/or correct the estimate printing pattern. The pattern recognition step may comprise at least on global pattern recognition step and, additionally, at least one partial pattern recognition step. The partial pattern recognition step may account for a block-specific deviation of the estimate printing pattern. The partial pattern recognition step may enhance accuracy and robustness of the method. The partial pattern recognition step may comprise selecting sub-images of the image of the micro-array around the grid points of the estimate printing pattern and determining a center of intensity in the sub-images. The center of intensities of the sub-images may be aggregated, specifically according to an intensity-based weight factor, to determine a block-specific center. By using the block-specific center, a deviation with regard to the estimate printing pattern may be determined and may be used to correct the estimate printing pattern for each block. The method may further comprise validating and/or correcting the corrected estimate printing pattern. Possible manual corrections of the estimate printing pattern may only take few minutes instead of few hours, which may be often the case when using known methods, such as the software application GenePix^{®} Pro 7. As a result of the pattern recognition step, a location of the spots in the image of the micro-array may be known and may be used to the dividing step iii..

The dividing step iii. may specifically comprise selecting sub-images with one spot per sub-image. The sub-image may be used for further processing in the segmentation step iv.. The segmentation step iv. may specifically comprise segmenting spots such that the spots of the printing pattern may be isolated from a background of the image.

The segmentation step iv. may comprise geodesic dilation of the sub-images. The geodesic dilation may specifically comprise using a marker image and an image mask. For generating the marker image, the segmentation step iv. may comprise at least one morphological opening of the sub-images and filtering the opened sub-images. This procedure may ensure that a collection of pixel with high intensity may be segmented instead of single pixels of high intensity, which may, for example, be interfering artifacts or single outliers. The generation of the marker image may further comprise Gauss-masking the filtered sub-images and binarizing the masked sub-images. Thus, by Gauss-masking the sub-images, the marker image may be focused on a center of the sub-image, specifically avoiding segmenting artifacts from a periphery of the sub-image. Binarizing the masked sub-images may comprise setting pixels of high intensity to 1, whereas low intensity images may be set to 0, wherein a threshold may be determined such that only 0.5 % of the pixel in the image with highest intensity are set to 1.

Additionally, the image mask may be generated by binarizing Gauss-masked images. Thus, the segmentation step iv. further comprises multiplying the sub-images with an image of Gaussian-distributed intensity and binarizing these Gauss-masked sub-images. The binarizing of the sub-image may comprise a threshold in accordance with a minimum intensity of the sub-image and the block. Thus, spots of high intensity and size and blocks of high signal intensity may be segmented in a robust way. For sub-images with low signal-noise distance, the image mask may be granular. In order to remove or at least account for this effect, the generation of the image masks may further comprise filtering the binarized images, for example by using a median filter.

The geodesic dilation may then comprise using the marker image and the image mask. The segmentation step iv. may further comprise, specifically after the geodesic dilation, morphological closing of the geodesic dilated sub-images. The morphological closing may be applied to fill holes in the segmented sub-images and/or to smooth contours of the segmented sub-image.

The segmented sub-images may be checked for various characteristics, which may specifically be selected by a user. For example, the segments may be too small, have an intensity below a certain threshold and/or deviate from a typical circular shape and, thus, may be rejected. The characteristics to be used for filtering the segmented sub-images may be selected by a user and/or may be predetermined according to their suitability with other images. The method may further comprise filtering redundant spots of the micro-array. As a result of the segmentation step iv., the spots in the image of the micro-array may be precisely segmented, whereas negative spots may remain without segments. After the segmentation step iv., the method may comprise correcting a form of the segmented spots. For example, the spots may be corrected by applying a convex closure. Spots with a size exceeding the convex closure may be reduced in size. The method may further comprise determining metrics from the intensity data of the segmented images, specifically comprising metrics on the segmented spots and/or the background of the image. Metrics for redundant spots may be combined to facilitate further evaluation.

Summarizing and without excluding further possible embodiments, the following embodiments may be envisaged:
Embodiment 1: A computer-implemented method of evaluating at least one image of at least one micro-array on a substrate, specifically of at least one microscopic fluorescence image of the micro-array, the method comprising:
   i. at least one retrieving step, comprising retrieving the at least one image and retrieving at least one set of deposition data comprising information on a deposition of spots of the micro-array on the substrate;
   ii. at least one pattern recognition step for automatically detecting a printing pattern of the micro-array in the image, comprising
      ii.1. generating a set of test patterns comprising a plurality of test patterns, by using the set of deposition data,
      ii.2. comparing the set of test patterns with information retrieved from the image, and
      ii.3. generating an estimate printing pattern in accordance with a degree of congruence of the test patterns with the image, the estimate printing pattern having a pattern of grid points;
   iii. at least one dividing step, comprising automatically selecting sub-images of the image in accordance with the grid points of the estimate printing pattern; and
   iv. at least one segmentation step, comprising automatically segmenting spots of the printing pattern in the sub-images.
Embodiment 2: The method according to the preceding embodiment, wherein the set of deposition data comprises at least one printing file containing information on printing positions of the spots of the micro-array.
Embodiment 3: The method according to any one of the preceding embodiments, wherein the set of deposition data comprises information on at least one of: a number of blocks of spots in the micro-array; a number of spots per block in a horizontal direction in the micro-array; a number of spots per block in a vertical direction in the micro-array; a distance between neighboring spots in a horizontal direction in the micro-array; a distance be-tween neighboring spots in a vertical direction in the micro-array; at least one position information of at least one block of the micro-array; identification information on at least one of the spots of the micro-array; information on at least one component of at least one substance deposited in at least one of the spots of the micro-array; position of at least one of the spots of the micro-array.
Embodiment 4: The method according to any one of the preceding embodiments, wherein the set of deposition comprises at least one GenePix Array List file (GAL).
Embodiment 5: The method according to any one of the preceding embodiments, wherein step ii.1. comprises generating the test patterns by using the set of deposition data and by using additional transformation parameters, wherein the test patterns of the set of test patterns are generated by using different transformation parameters.
Embodiment 6: The method according to the preceding embodiment, wherein the transformation parameters comprise at least one item of information on: a scaling in at least one dimension; a rotational angle; an offset in at least one dimension.
Embodiment 7: The method according to any one of the two preceding embodiments, wherein in step ii.1. the set of test patterns is generated by providing a set of different transformation parameters and by generating the patterns for the different transformation parameters.
Embodiment 8: The method according to any one of the preceding embodiments, wherein in step ii.3. the estimate printing pattern is selected by using the set of test patterns, such that the estimate printing pattern has a best match with the image.
Embodiment 9: The method according to any one of the preceding embodiments, wherein the test patterns comprise a pattern of test grid points, wherein step ii.1. comprises a dilation of the test grid points, thereby generating an image of a test micro-array, wherein the match degree of congruence is determined by comparing the image of the test micro-array with the image.
Embodiment 10: The method according to the preceding embodiment, wherein generating the image of the test micro-array further comprises a smoothing of the dilated test grid points.
Embodiment 11: The method according to any one of the preceding embodiments, wherein the comparing of the set of test patterns with information retrieved from the image in step ii.2. comprises using at least one correlation algorithm.
Embodiment 12: The method according to the preceding embodiment, wherein the correlation algorithm comprises at least one correlation of Fourier-transforms.
Embodiment 13: The method according to any one of the two preceding embodiments, wherein the comparing of the set of test patterns with information retrieved from the image in step ii.2. comprises applying at least one sharpening process to the correlated image, specifically at least one sharpening process comprising applying at least one high-pass filter to the correlated image.
Embodiment 14: The method according to any one of the preceding embodiments, wherein the pattern recognition step ii. comprises at least one global pattern recognition step for detecting the entire printing pattern of the micro-array in the image, and wherein the pattern recognition step additionally comprises at least one partial pattern recognition and correction step for correcting the estimate printing pattern of the micro-array resulting from the global pattern recognition step for at least one sub-set of the set of deposition data.
Embodiment 15: The method according to the preceding embodiment, wherein the set of deposition data comprises a plurality of identical blocks, each block having a sub-set of the spots of the micro-array, the blocks being deposited on the substrate in a block pattern, specifically in a block pattern with the blocks being deposited in a shifted and/or an adjacent fashion.
Embodiment 16: The method according to any one of the two preceding embodiments, wherein the partial pattern recognition and correction step comprises selecting sub-images of the image around the grid points of the estimate printing pattern, determining a center of intensity in the sub-images and determining a deviation of the center of intensity in the sub-images from the grid points of the estimate printing pattern.
Embodiment 17: The method according to the preceding embodiment, wherein the partial pattern recognition and correction step comprises correcting the estimate printing pattern by using the deviation of the center of intensity in the sub-images from the grid points of the estimate printing pattern.
Embodiment 18: The method according to any one of the preceding embodiments, wherein the dividing step iii. comprises selecting one sub-image of the image for each grid point of the estimate printing pattern.
Embodiment 19: The method according to any one of the preceding embodiments, wherein the dividing step iii. comprises selecting the sub-images such that the grid points of the estimate printing pattern are centered within their respective sub-images.
Embodiment 20: The method according to any one of the preceding embodiments, wherein the sub-images of the dividing step iii. are selected from the group consisting of: polygonal sub-images; rectangular sub-images, specifically square sub-images; honeycomb-shaped sub-images; oval sub-images, specifically elliptical sub-images.
Embodiment 21: The method according to any one of the preceding embodiments, wherein step iv. comprises geodesic dilation of the sub-images.
Embodiment 22: The method according to the preceding embodiment, wherein the geodesic dilation of the sub-images comprises using processed sub-images, specifically marker images, and at least one image mask.
Embodiment 23: The method according to the preceding embodiment, wherein a processing of the sub-images in step iv. comprises:
   iv.1. at least one morphological opening of the sub-images,
   iv.2. at least one filtering of the opened sub-images, specifically by using a median filter,
   iv.3. Gauss-masking the filtered sub-images of step iv.2., and
   iv.4. binarizing the masked sub-images of step iv.3.,
   thereby obtaining the processed sub-images.
Embodiment 24: The method according to the preceding embodiment, wherein the binarizing is performed by using a threshold method, specifically a threshold selected from the group consisting of: an absolute threshold; a relative threshold, specifically a relative threshold being dependent on a quantile intensity in the sub-image, e.g. a maximum intensity in the sub-image.
Embodiment 25: The method according to any one of the three preceding embodiments, wherein step iv. further comprises generating the at least one image mask for evaluating the image of the micro-array.
Embodiment 26: The method according the preceding embodiment, wherein the generating of the at least one image mask comprises binarizing the sub-images, specifically binarizing Gaussian-filtered sub-images.
Embodiment 27: The method according to the preceding embodiment, wherein the binarizing is performed by using a threshold method, specifically a threshold selected from the group consisting of: an absolute threshold; a relative threshold, specifically a relative threshold being dependent on a minimum of a mean intensity in the sub-image and a mean intensity in the image.
Embodiment 28: The method according to any one of the two preceding embodiments, wherein the generating of the at least one image mask further comprises filtering the binary sub-images, specifically by using a median filter.
Embodiment 29: The method according to any one of the three preceding embodiments, wherein the generating of the at least one image mask comprises:
   iv.a. multiplying the sub-images with an image of Gaussian-distributed intensity,
   iv.b. binarizing the sub-images generated in step iv.a., and
   iv.c. filtering the binary images of step iv.b. with a median-filter.
Embodiment 30: The method according to any one of the nine preceding embodiments, wherein step iv. comprises at least one morphological closing of the geodesic dilated sub-images.
Embodiment 31: The method according to any one of the preceding embodiments, wherein step iv. further comprises selecting the sub-images considering at least one characteristic of the segmented spots selected from the group consisting of: a minimum intensity; a distance of the spot to an sub-image center; a circularity; a solidity; a bounding disk coverage.
Embodiment 32: The method according to any one of the preceding embodiments, wherein step iv. comprises at least one morphological opening of the sub-images.
Embodiment 33: The method according to any one of the preceding embodiments, wherein step iv. comprises at least one filtering the sub-images, specifically by using a median filter.
Embodiment 34: The method according to any one of the preceding embodiments, wherein step iv. comprises Gauss-masking the sub-images.
Embodiment 35: The method according to any one of the preceding embodiments, wherein step iv. comprises binarizing the sub-images.
Embodiment 36: The method according to the preceding embodiment, wherein the binarizing is performed by using a threshold method, specifically a threshold selected from the group consisting of: an absolute threshold; a relative threshold.
Embodiment 37: An image evaluation system for evaluating at least one image of at least one micro-array on a substrate, specifically of at least one microscopic fluorescence image of the micro-array, the image evaluation system comprising:
   I. at least one retrieving unit configured for retrieving the at least one image and for retrieving at least one set of deposition data comprising information on a deposition of spots of the micro-array on the substrate;
   II. at least one pattern recognition unit configured for automatically detecting a printing pattern of the micro-array in the image, the detecting comprising the steps of
   ii.1. generating a set of test patterns comprising a plurality of test patterns by using the set of deposition data,
   ii.2. comparing the set of test patterns with information retrieved from the image, and
   ii.3. generating an estimate printing pattern in accordance with a degree of congruence of the test patterns with the image, the estimate printing pattern having a pattern of grid points;
   III. at least one dividing unit configured for automatically selecting sub-images of the image in accordance with the grid points of the estimate printing pattern; and
   IV. at least one segmentation unit configured for automatically segmenting spots of the printing pattern in the sub-images.
Embodiment 38: The image evaluation system according to the preceding embodiment, wherein the retrieving unit, the pattern recognition unit, the dividing unit and the segmentation unit are at least partially embodied by at least one processor of the image evaluation system.
Embodiment 39: The image evaluation system according to any one of the two preceding embodiments, wherein the image evaluation system is configured for performing the method of evaluating at least one image of at least one micro-array on a substrate according to any one of the preceding embodiments referring to a method.
Embodiment 40: A computer program comprising instructions which, when the program is executed by a computer, cause the computer to perform the method according to any one of the preceding embodiments referring to a method.
Embodiment 41: A computer-readable storage medium comprising instructions which, when executed by a computer, cause the computer to perform the method according to any one of the preceding embodiments referring to a method.

### Short description of the Figures

Further optional features and embodiments will be disclosed in more detail in the subsequent description of embodiments, preferably in conjunction with the dependent claims. Therein, the respective optional features may be realized in an isolated fashion as well as in any arbitrary feasible combination, as the skilled person will realize. The scope of the invention is not restricted by the preferred embodiments. The embodiments are schematically depicted in the Figures. Therein, identical reference numbers in these Figures refer to identical or functionally comparable elements.

In the Figures:
- Figure 1: shows a flow chart of an embodiment of a method of evaluating at least one image of at least one micro-array on a substrate;
- Figures 2A to 2J: show exemplary images at different steps of the pattern recognition step ii.;
- Figures 3A to 3K: shows exemplary images at different steps of the segmentation step iv.; and
- Figure 4: shows a schematic embodiment of an image evaluation system.

Detailed description of the embodiments

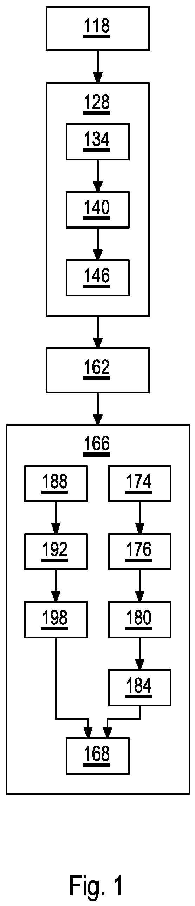

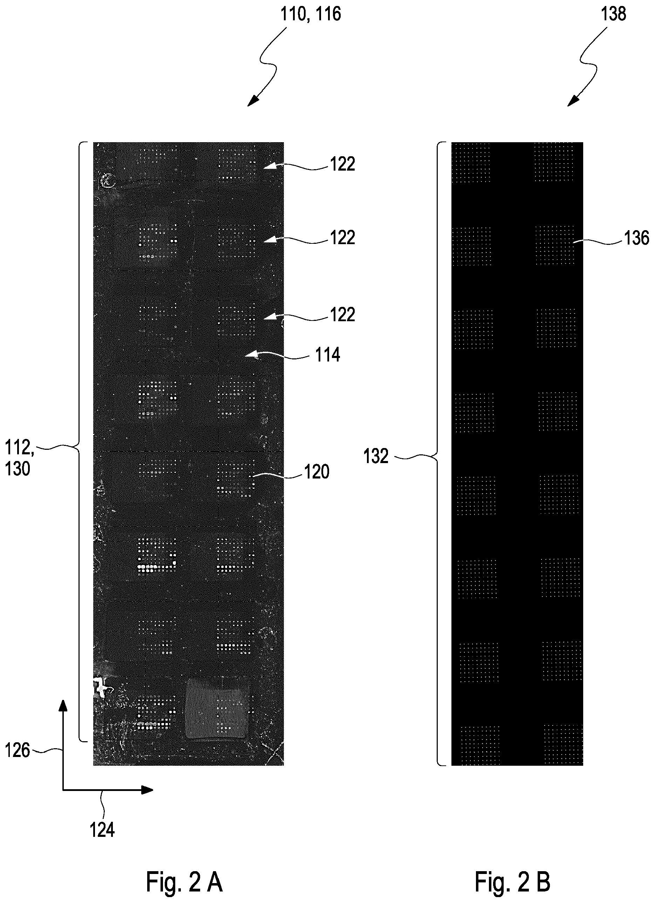

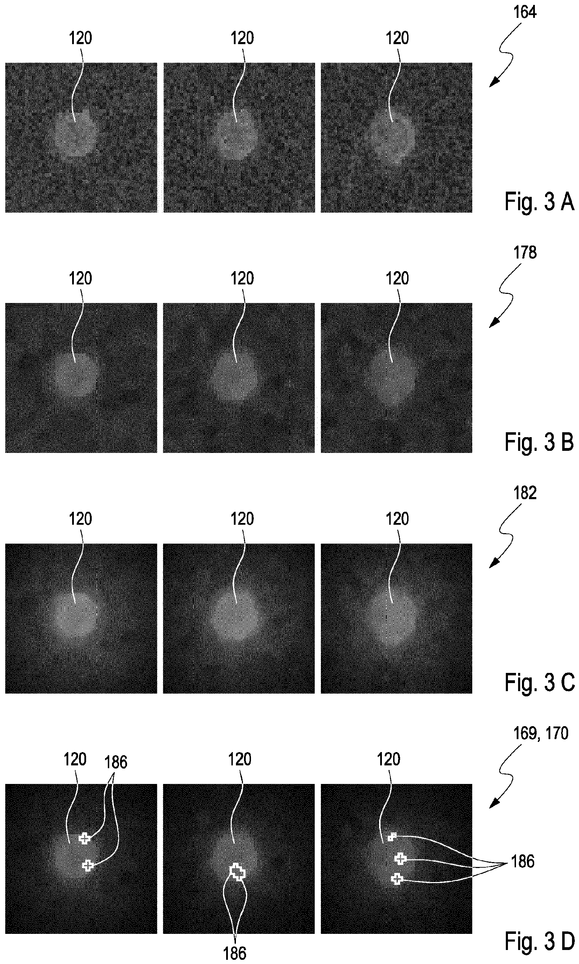

Figure 1 shows a flow chart of an exemplary embodiment of a method of evaluating at least one image 110 of at least one micro-array 112 on a substrate 114. An exemplary image 110 of the micro-array 112, specifically an exemplary microscopic fluorescence image 116 of the micro-array 112, is shown in Figure 2A. Further exemplary images at different steps of the method are shown in Figures 2A to 2J and in Figures 3A to 3K and will be described in below together with the method as illustrated in Figure 1.

The method comprises the following steps, which are shown in Figure 1 and may, as an example, be performed in the given order. It shall be noted, however, that a different order is also possible. Further, it is possible to perform one or more of the method steps once or repeatedly. Further, it is possible to perform two or more of the method steps simultaneously or in a timely overlapping fashion. The method may comprise further method steps which are not listed.

The method comprises at least one retrieving step i. (denoted by reference number 118), comprising retrieving the at least one image 110 and retrieving at least one set of deposition data comprising information on a deposition of spots 120 of the micro-array 112 on the substrate 114. By way of example, the spots 120 of the micro-array 112 may be deposited on the substrate 114, specifically on a surface of the substrate 114, using robotic micro-pipetting, micro-printing or the like. The deposition of the spots 120 may at least partially be performed automatically, such as by computer-control and, in particular, without user interaction. Thus, the spots 120 of the micro-array 112 may be deposited on the substrate 114 according to given input data. For example, the set of deposition data may comprise at least one printing file containing information on printing positions of the spots 120 of the micro-array 112. The set of deposition data may comprise information on at least one of: a number of blocks 122 of spots 120 in the micro-array 112; a number of spots 120 per block 122 in a horizontal direction 124 in the micro-array 112; a number of spots 120 per block 122 in a vertical direction 126 in the micro-array 112; a distance between neighboring spots 120 in a horizontal direction 124 in the micro-array 112; a distance between neighboring spots 120 in a vertical direction 126 in the micro-array 112; at least one position information of at least one block 122 of the micro-array 112; identification information on at least one of the spots 120 of the micro-array 112; information on at least one component of at least one substance deposited in at least one of the spots 120 of the micro-array 112; position of at least one of the spots 120 of the micro-array 112. For example, the set of deposition data may comprise at least one GenePix^{®} Array List file (GAL).

The method further comprises at least one pattern recognition step ii. (denoted by reference number 128) for automatically detecting a printing pattern 130 of the micro-array 112 in the image 110. The pattern recognition step ii. comprises step ii.1. (denoted by reference number 134), comprising generating a set of test patterns 132 comprising a plurality of test patterns 132, by using the set of deposition data. An image of an exemplary test pattern 132 is shown in Figure 2B. In this example, step ii.1. may comprise generating the test patterns 132 by using the set of deposition data and by using additional transformation parameters. The test patterns 132 of the set of test patterns 132 may be generated by using different transformation parameters. The transformation parameters may comprise at least one item of information on: a scaling in at least one dimension; a rotational angle; an offset in at least one dimension. In step ii.1., the set of test patterns 132 may specifically be generated by providing a set of different transformation parameters and by generating the patterns 132 for the different transformation parameters.

As can be seen in Figure 2B, the test patterns 132 may comprise a pattern of test grid points 136. Step ii.1. may comprise a dilation of the test grid points 136, thereby generating an image of a test micro-array 138. Generating the image of the test micro-array 138 may further comprise a smoothing of the dilated test grid points 136. For example, step ii.1. may comprise constructing an artificial image of a test micro-array image, which may specifically provide the test pattern 132, by an expansion of single pixel points forming the printing pattern 130 by means of a dilation and a Gaussian smoothing.

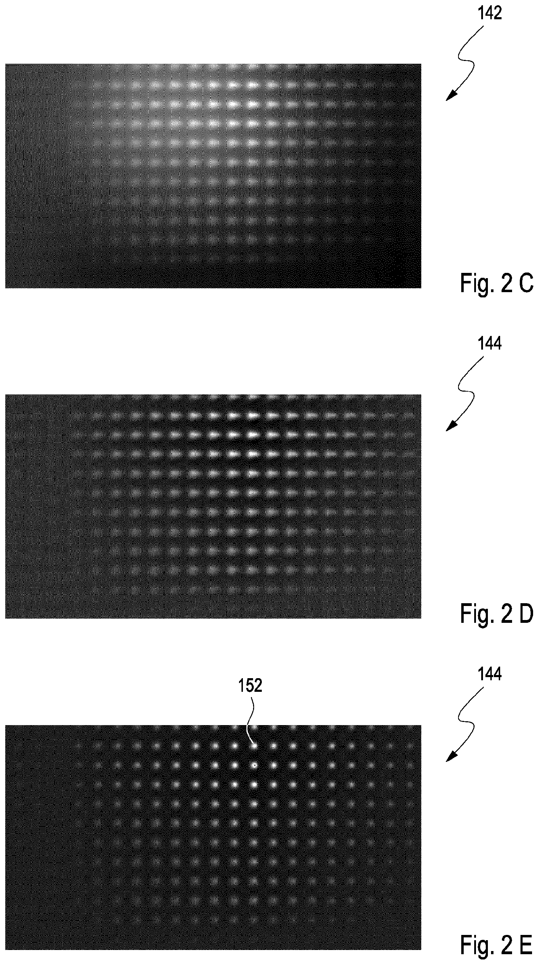

The pattern recognition step ii., as shown in Figure 1, further comprises step ii.2. (denoted by reference number 140), comprising comparing the set of test patterns 132 with information retrieved from the image 110. In this example, the comparing of the set of test patterns 132 with information retrieved from the image 110 in step ii.2. may comprise using at least one correlation algorithm. The correlation algorithm may comprise at least one correlation of Fourier-transforms. Thus, the information retrieved from the image 110 may comprise a Fourier-transform of the image 110. The correlation algorithm may specifically rely on the convolutional theorem, i.e. comprises multiplying the Fourier-transform of the image 110 with the Fourier-transform of the set of test patterns 132, specifically with the Fourier-transform of the image of a test micro-array 138. The correlation of Fourier-transforms may provide a fast procedure of comparing the set of test patterns 132 with the information retrieved from the image 110. However, in principle, correlating the set of test patterns 132 with the information retrieved in the image 110 may also be possible in the positions space, real space or coordinate space. An exemplary result of the correlation of the Fourier-transforms of the image 110 and of the set of test patterns 132, specifically of the image of a test micro-array 138, is shown in Figure 2C. Therein, a section of the correlated image 110 with a test pattern 132 of the set of test patterns 132 is shown (denoted by reference number 142), specifically illustrating a section of a bock pattern. Further, the comparing of the set of test patterns 132 with information retrieved from the image 110 in step ii.2. may, additionally, comprise applying at last one sharpening process to the correlated image 142. In this example, the sharpening process may comprise applying at least one high-pass filter to the correlated image 142. An exemplary result of the application of the high-pass filter to the correlated image 142 is illustrated in Figure 2D. Figure 2D specifically shows a correlated, high-pass filtered image 144 for the same section as illustrated in Figure 2C. As can be seen in Figure 2D, applying the high pass filter may enable suppression of background and, thus, may enhance robustness of the pattern recognition step ii.. Additionally or alternatively, the sharpening process may comprise one or more other sharpening steps, such as an additional correlation, specifically comprising correlating the correlated image 142 with an additional kernel to enhance contrast around grid points, or locally enhancing contrast around grid points.

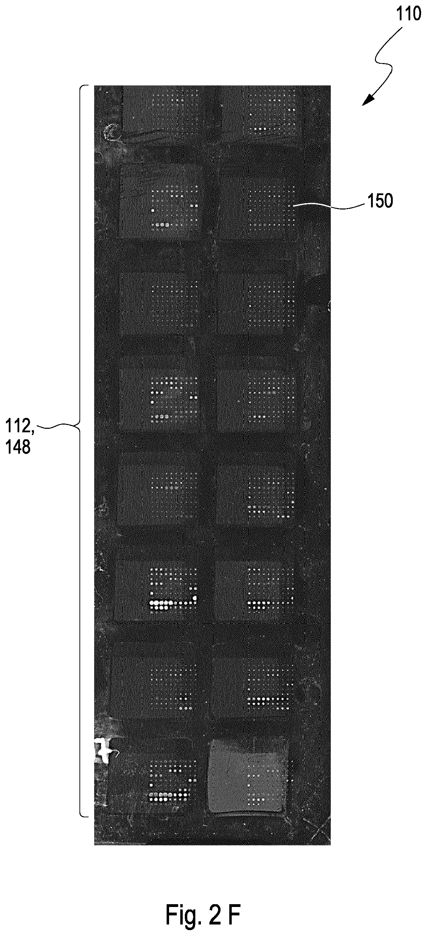

Referring back to Figure 1, the pattern recognition step ii. further comprises step ii.3. (denoted by reference number 146), comprising generating an estimate printing pattern 148 in accordance with a degree of congruence of the test patterns 132 with the image 110, the estimate printing pattern 148 having a pattern of grid points 150. An exemplary estimate printing pattern 148 having the pattern of grid points 150 is shown in Figure 2F. Therein, the estimate printing pattern 148 is shown on top of the image 110 of the micro-array 112.

Specifically, in step ii.3., the estimate printing pattern 148 may be selected by using the set of test patterns 132, such that the estimate printing pattern 148 has a best match with the image 110, for example by selecting the estimate printing pattern 148 from the set of test patterns 132 and/or by inter- or extrapolating the test patterns 132 in order to generate the estimate printing pattern 148 having the best match. For example, the best match may be determined in accordance with the degree of congruence of the test patterns 132 with the image 110. As outlined above, the pattern recognition step ii. may comprise, specifically in step ii.1., generating the image of a test micro-array 138 using the test patterns 132 and, specifically in step ii.2., correlating the Fourier-transform of the image 110 with the Fourier-transform of the set of test patterns 132, specifically with the Fourier-transform of the image of a test micro-array 138, thereby obtaining the correlated, and optionally high-pass filtered, image 142, 144. Thus, in this example, the degree of congruence may be determined by comparing the image of the test micro-array 138 with the image 110. Specifically, the estimate printing pattern 148 may be selected from the set of test patterns 132 in accordance with an absolute maximum in intensity of the correlated, high-pas filtered images 144 corresponding to the selected test pattern 132. By assigning the test pattern 132 to the correlated image 144 of maximum intensity, the best degree of congruence of the test pattern 132 with the image 110 may be determinable, specifically comprising the best match of rotation and/or scaling of the test pattern 132. An offset or a translation may be determined by a location of a spot of maximum intensity 152 in the correlated image 144. An exemplary correlated image 144 showing the best match of the corresponding test pattern 132 with the image 110 is shown in Figure 2E.

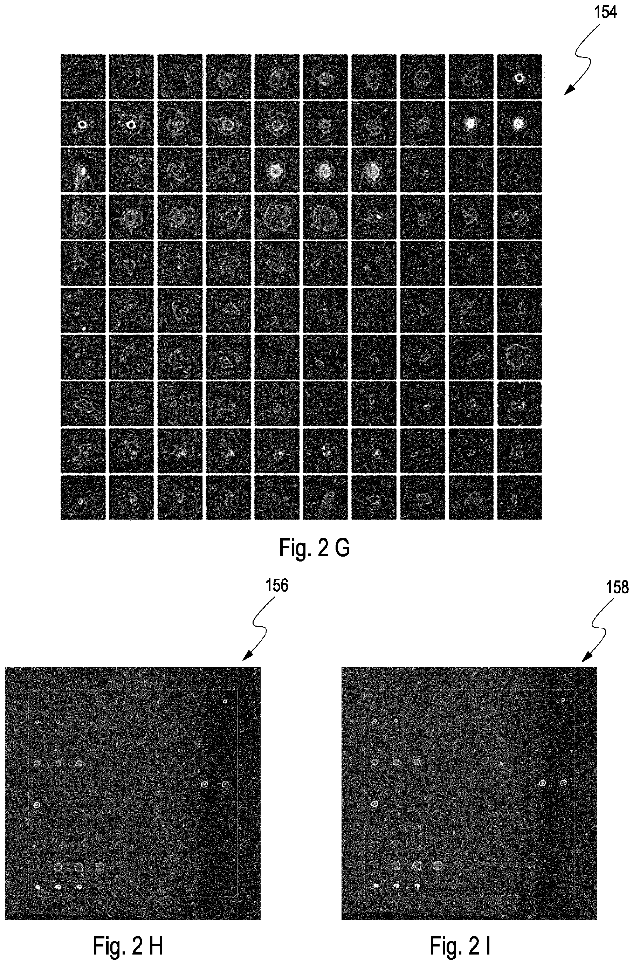

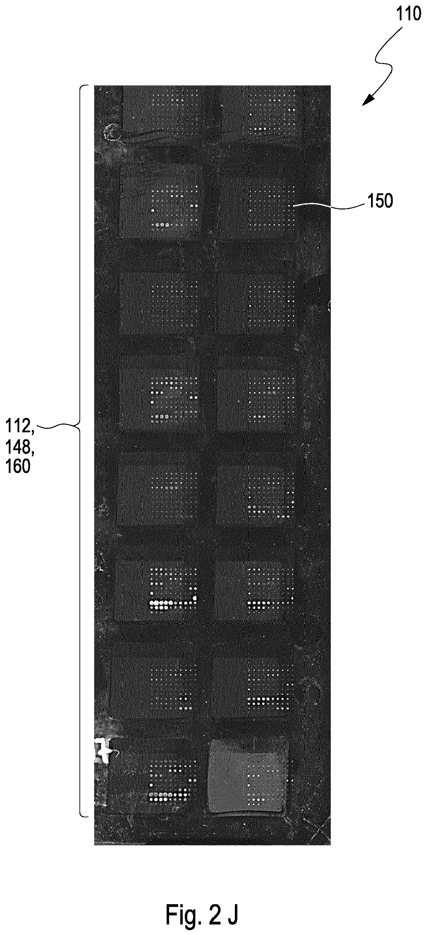

Further, the pattern recognition step ii. may further comprise at least one global pattern recognition step for detecting the entire printing pattern 130 of the micro-array 112 in the image 110, specifically at least one global pattern recognition step as described above. The pattern recognition step ii. may additionally comprise at least one partial pattern recognition and correction step for correcting the estimate printing pattern 148 of the micro-array 112 resulting from the global pattern recognition step for at least one sub-set of the set of deposition data. The set of deposition data may specifically comprise a plurality of identical blocks 122, each block 122 having a sub-set of the spots 120 of the micro-array 112. The blocks 122 may be deposited on the substrate 114 in a block pattern, specifically in a block pattern with the blocks 122 being deposited in a shifted and/or an adjacent fashion. The partial pattern recognition and correction step may comprise selecting sub-images 154 of the image 110 around the grid points 150 of the estimate printing pattern 148. An exemplary selection of the sub-images 154 around the grid points 150 is shown in Figure 2G. The partial pattern recognition and correction step may further comprise determining a center of intensity in the sub-images 154 and determining a deviation of the center of intensity in the sub-images 154 from the grid points 150 of the estimate printing pattern 148. The partial pattern recognition and correction step may comprise correcting the estimate printing pattern 148 by using the deviation of the center of intensity in the sub-images 154 from the grid points 150 of the estimate printing pattern 148. For example, a mean deviation for each block 122 may be used for a block-specific correction of the estimate printing pattern 148. An exemplary result of the correction of partial pattern recognition step is shown in Figure 2I, specifically in comparison the uncorrected result of the pattern recognition step ii. as illustrated in Figure 2H, for an exemplary block 122 of the estimate printing pattern 148. Specifically, Figure 2H shows an uncorrected block 156 of the estimate printing pattern 148 and Figure 2I shows a corrected block 158 of the estimate printing pattern 148 using the correction the partial pattern recognition step. To this end, Figure 2J shows the estimate printing pattern 148 with the block-specific correction of the partial pattern recognition step (denoted by reference number 160) on top of the image 110 of the micro-array 112.

Turning back to Figure 1, the method further comprises at least one dividing step iii. (denoted by reference number 162), comprising automatically selecting sub-images 164 of the image 110 in accordance with the grid points 150 of the estimate printing pattern 148. In this example, the dividing step iii. may comprise selecting one sub-image 164 per grid point 150 of the estimate printing pattern 148. However, other selections of sub-images 164, for example comprising groups of grid points 150 or a block 122 of grid points 150 of the estimate printing pattern 148, are also feasible. Exemplary sub-images 164 comprising one grid point 150 of the estimate printing pattern 148 per sub-image 164 are shown in Figure 3A. The dividing step iii. may specifically comprise selecting one sub-image 164 of the image 110 for each grid point 150 of the estimate printing pattern 148. As can be seen in Figure 3A, the dividing step iii. may further comprise selecting the sub-images 164 such that the grid points 150 of the estimate printing pattern 148 are centered within their respective sub-images 164. The sub-images of the dividing step iii. may, as an example, be square sub-images. However, in principle, other forms of sub-images 164, such as rectangular sub-images, honeycomb-shaped sub-images, oval sub-images, specifically elliptical sub-images, are also feasible, specifically in accordance with the regular pattern of the micro-array 112.

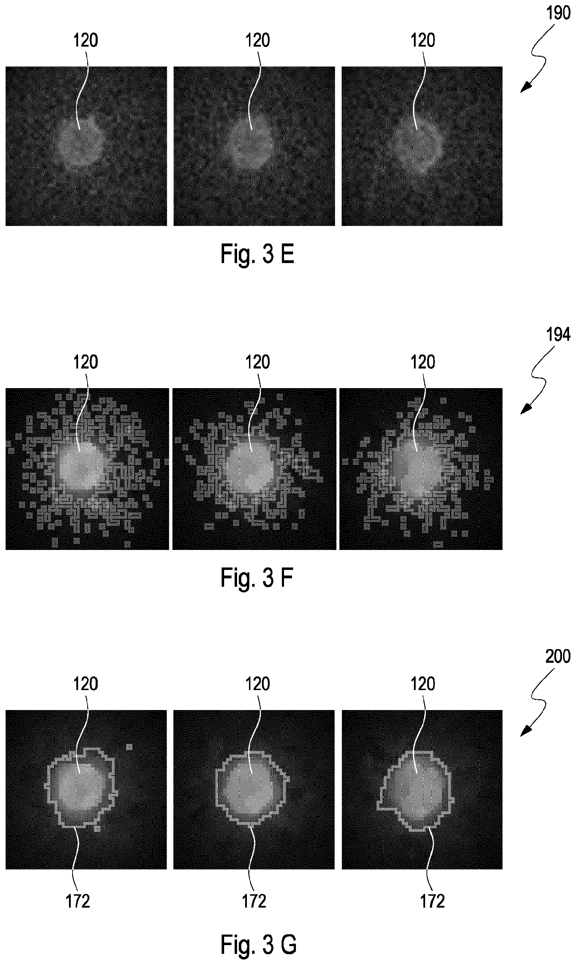

The method further comprises, as illustrated in Figure 1, at least one segmentation step iv. (denoted by reference number 166), comprising automatically segmenting spots 120 of the printing pattern 130 in the sub-images 164. Specifically, the segmentation step iv. may comprise geodesic dilation of the sub-images 164 (denoted by reference number 168). The geodesic dilation of the sub-images 164 may comprise using processed sub-images 169, specifically marker images 170, and at least one image mask 172, as shown in Figures 3D and 3G, respectively. The segmentation step iv. may comprise, specifically prior to the geodesic dilation of the sub-images 164, processing the sub-images 164 to obtain the processed sub-images 169, specifically the marker images 170, and generating the at least one image mask 172 for evaluating the image 110 of the micro-array 112. The processing of the sub-images 164 and the generation of the image mask 172 may be independent method steps and may be performed consecutively, for example the processing of the sub-images 164 prior to the generation of the image mask 172 or the generation of the image mask 172 prior to the processing of the sub-images 164, or in a timely overlapping fashion, for example simultaneously.

The processing of the sub-images 164 in step iv. may comprise step iv.1. (denoted by reference number 174), comprising at least one morphological opening of the sub-images 164 and step iv.2. (denoted by reference number 176), comprising at least one filtering of the opened sub-images 164, specifically by using a median filter. A result of the morphological opening of the sub-images 164 and filtering the opened sub-images 164 is shown in Figure 3B for the exemplary sub-images of Figure 3A. In Figure 3B, reference number 178 denotes the filtered and opened sub-images. Further, the processing of the sub-images 164 in step iv. may comprise step iv.3. (denoted by reference number 180), comprising Gauss-masking the filtered sub-images 178 of step iv.2.. By Gauss-masking the filtered sub-images 178, the marker images 170 may be focused on a center of the sub-image 164, specifically avoiding segmenting artifacts from a periphery of the sub-image 164. Exemplary results of the Gauss-masking are shown in Figure 3C, specifically illustrating the Gauss-masked sub-images 182. The processing of the sub-images 164 in step iv. may additionally comprise step iv.4. (denoted by reference number 184), comprising binarizing the masked sub-images 182 of step iv.3., thereby obtaining the processed sub-images 169, specifically the marker images 170 as shown in Figure 3D. Specifically, the binarizing of the masked sub-images 182 may be performed by using a threshold method. In this example, a relative threshold may be used, specifically a relative threshold being dependent on a quantile intensity in the sub-image 164, e.g. a maximum intensity in the sub-image. For example, the relative threshold for binarizing the masked sub-images 182 of step iv.3. may be determined such that only 0.5 % of the pixels in the image 182 with highest intensity are set to 1. The binary pixels are indicated in Figure 3D by reference number 186.

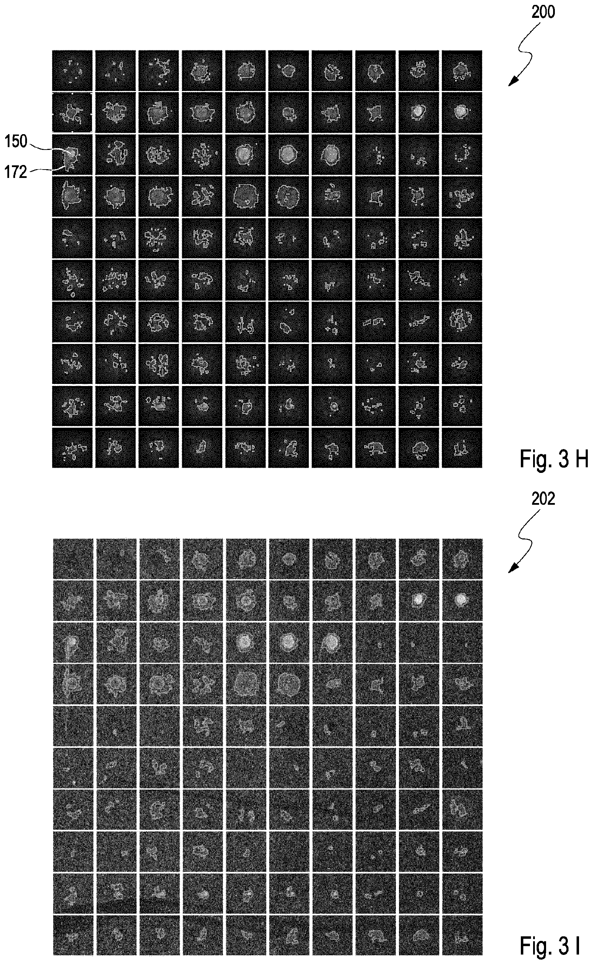

Further, the generation of the image mask 172 may comprise step iv.a. (denoted by reference number 188), comprising multiplying the sub-images 164 with an image of Gaussian-distributed intensity. Exemplary sub-images 164 generated in step iv.a. are shown in Figure 3E and are denoted by reference number 190. The generation of the image mask 172 may further comprise step iv.b. (denoted by reference number 192), comprising binarizing the sub-images 190 generated in step iv.a.. For example, the binarizing may be performed by using a threshold method, specifically using a relative threshold being dependent on a minimum of a mean intensity in the sub-image 190 and a mean intensity in the image 110. For example, the relative threshold may be a minimum of a mean intensity in the sub-image 190 and a mean intensity of a corresponding block 122 in the image 110. The binary sub-images 194 are shown, by way of example, in Figure 3F. Binary pixels are indicated in Figure 3F by reference number 196. The generation of the image mask 172 may additionally comprise step iv.c. (denoted by reference number 198), comprising filtering the binary images 194 of step iv.b. with a median-filter. Exemplary filtered binary images 200 are shown in Figure 3G in detail and in Figure 3H in an overview for an exemplary block 122.

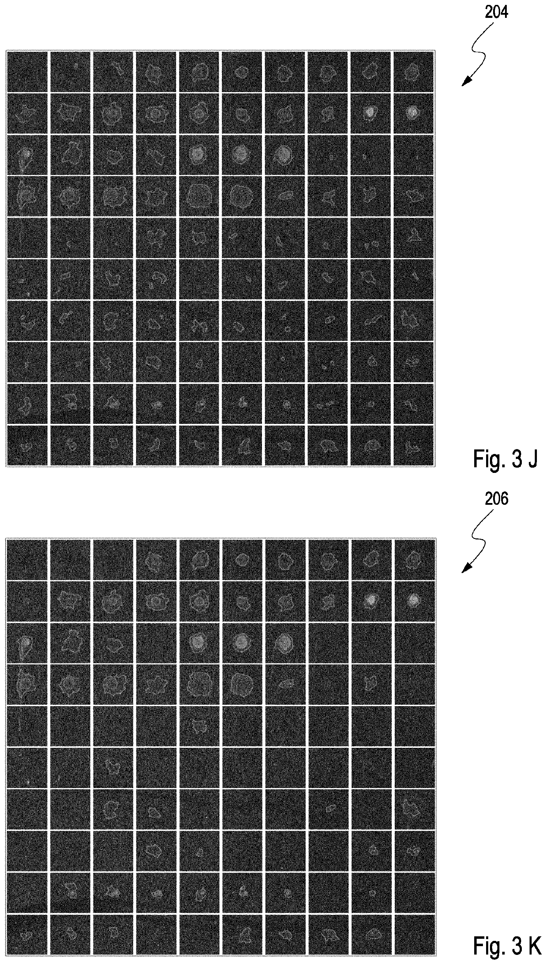

Further, specifically by using the marker images 170 and the image mask 172, the geodesic dilation may be performed. Exemplary results of the geodesic dilated sub-images 202 are shown in Figure 3I for an exemplary block 122. Step iv. may additionally comprise at least one morphological closing of the geodesic dilated sub-images 202, specifically for smoothing the contours of the segmented spots 120. A result of the morphological closing on the geodesic dilated sub-images 202 is shown in Figure 3J, specifically showing the morphological closed sub-images 204. Further, step iv. may comprise selecting the sub-images 164, specifically the morphological closed sub-images 204, considering at least one characteristic of the segmented spots 120 selected from the group consisting of: a minimum intensity; a distance of the spot 120to an sub-image center; a circularity; a solidity; a bounding disk coverage. An exemplary result of the selection of the morphological closed sub-images 204 is shown in Figure 3K. The selected sub-images 206 may provide a basis for further evaluation and analysis of the spots 120 of the micro-array 112.

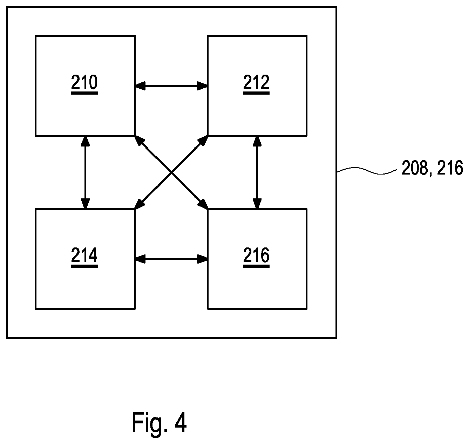

Figure 4 shows a schematic embodiment of an image evaluation system 208. The image evaluation system 208 is configured for evaluating the at least one image 110 of the at least one micro-array 112 on the substrate 114, specifically of the at least one microscopic fluorescence image 116 of the micro-array 112. Specifically, the image evaluation system 208 may be configured for performing the method of evaluating the at least one image 110 of the at least one micro-array 112 on the substrate 114 according to the present invention, such as according to the embodiments as described in Figure 1 or according to any other possible embodiments disclosed herein.

The image evaluation system 208 comprises:
I. at least one retrieving unit 210 configured for retrieving the at least one image 110 and for retrieving the at least one set of deposition data comprising information on the deposition of spots 120 of the micro-array 112 on the substrate 114;
II. at least one pattern recognition unit 212 configured for automatically detecting the printing pattern 130 of the micro-array 112 in the image 110, the detecting comprising the steps of
   iv.1. generating the set of test patterns 132 comprising the plurality of test patterns 132 by using the set of deposition data,
   iv.2. comparing the set of test patterns 132 with information retrieved from the image 110, and
   iv.3. generating the estimate printing pattern 148 in accordance with the degree of congruence of the test patterns 132 with the image 110, the estimate printing pattern 148 having the pattern of grid points 150;
III. at least one dividing unit 214 configured for automatically selecting sub-images 164 of the image 110 in accordance with the grid points 150 of the estimate printing pattern 148; and
IV. at least one segmentation unit 216 configured for automatically segmenting spots 120 of the printing pattern 130 in the sub-images 164.

The retrieving unit 210, the pattern recognition unit 212, the dividing unit 214 and the segmentation unit 216 may specifically be at least partially embodied by at least one processor 216 of the image evaluation system 208. The retrieving unit 210, the pattern recognition unit 212, the dividing unit 214 and the segmentation unit 216 may be configured for exchange data and/or information with each other, as indicated by the arrows in Figure 4.

### Examples

In the following, exemplary embodiments of implementations of steps i.-iv. of the method by software programming of a standard processor are given. The implementations are based on the preceding retrieving step comprising the retrieving of the at least one image 110 and the at least one set of deposition data, which is, however, a routine step as generally known to the skilled person.

### Example 1: Exemplary implementation of the pattern recognition step ii.

In example 1, an exemplary implementation of the pattern recognition step ii. is described. The pattern recognition step ii. can be performed by executing the following algorithm, written in pseudocode. The steps of the algorithm are explained by comments, marked by "*":

```
 // * step ii.1 *
 // create kernel images which represent several spotting patterns for the given
 // spot-coordinates
  
 kernels = []
 FOR transformParamSet in transformParamSets:
      // transform coordinates received from array layout file
      transformedSpotCoordinates = transform(spotCoordinates, transformParamSet)
      // move coordinates to positive domain
      minXY = min(transformedSpotCoordinates)
      newSpotCoordinates = transformedSpotCoordinates + (-minXY)
      // get size of coordinate space
      maxXY = max(newSpotCoordinates)
      // calculate kernel dimensions with extra space for dilation and gaussian blur
      dilationGaussianMargin = dilationRadius + 2 * sigma
      kernelDimensions = maxXY + 2 * dilationGaussianMargin
      // create zero array
      kernel = new array(kernelDimensions, 0)
      // fill pixels of spotCoordinates
      FOR spotCoordinate in newSpotCoordinates
         kernel [spotCoordinate + dilationGaussianMargin] = 1
      // dilate single pixels
      kernel = binaryDilation(kernel, dilationRadius)
      // blur dilated spots
      kernel = gaussianBlur(kernel, sigma)
      // add to kernel set
      kernels. add(kernel)
```

```
 // * step ii.2 *
 // compare the image with the set of kernels
 // pad image with mean value to prevent border artifacts due to high pass filtering
 paddedImage = padTo(image, imageDimensions + paddingMargin, mean(image));
 // calculate fast fourier transform of the image
 imageFrequencyDomain = fft(paddedImage)
 results = []
 FOR kernel in kernels
      // pad kernel to the same size as the image
      paddedKernel = padTo(kernel, imageDimensions + paddingMargin, 0)
      // calculate fast fourier transform of the kernel
      kernelFrequencyDomain = fft(paddedKernel)
      // use convolution theorem
      result = imageFrequencyDomain * kernelFrequencyDomain
      // calculate inverse fourier transform
      ifftResult = ifft(result)
      // reverse the fft shift
      shiftedResult = fftShift(ifftResult)
      // crop result to valid area
      croppedResult = crop(shiftedResult)
      // apply high pass filtering
      highpassedResult = highPassFilter(croppedResult, cutoffFrequency)
      // add result to results
      results. add(highpassedResult)
```

```
 // * step ii.3 *
 // approximate the best fitting grid to the given image and coordinates
 // get the index of the best fit from all results and the maximum pixel value coordinates in
 // that result image
 (bestParamSetIndex, maxValueXY) = maxIndex(results)
 // reverse the translational transform for the coordinates of the maximum value to
 // determine the offset
 offsetXY = maxValueXY - paddingMargin + dilationGaussianMargin
 // calculate the best fitting coordinates
 bestFittingCoordinates = transform(spotCoordinates,
      transformParamSets[bestParamSetIndex])
      FOR coordinates in bestFittingCoordinates
      coordinates = coordinates + offsetXY
```

### Example 2: Exemplary implementation of the dividing step iii. and the segmentation step iv.

In example 2, an exemplary implementation of the dividing step iii. and the segmentation step iv. is described. The segmentation step iv. can be performed by executing the following algorithm, written in pseudocode. Again, the steps of the algorithm are explained by comments, marked by "*":

```
 // * step iii *
 // divide the image into small tile images (tiles) by cutting small sub-areas around spot
 // coordinates
 tiles = []
 FOR coordinates in bestFittingCoordinates
      tile = cut(image, {coordinates - tileMargin, coordinates + tileMargin})
      tiles.add(tile)
      // * step iv *
      // segments spots in single images (tile) with a two-step-segmentation-method
      // (geodesic dilation)
      // get the mean intensity for a subset of tiles for every block
 meanOfBlocks = []
 FOR block in grid
      blockSubset = getBlockTiles(tiles, blockIndex)
      blockMean = mean(blockSubset)
      meanOfBlocks.add(blockMean)
      // preprocess tiles
 openedTiles = binaryOpening(tiles, openingRadius)
 medianFilteredTiles = medianFilter(openedTiles, medianRadius1)
 // compose a binary tile of marker pixels for every tile
 // create a gaussian mask to fade out border regions
 gaussianMask1 = gaussianMatrix(gaussRadius1, gaussSigma1)
 markerTiles = []
 FOR tile in medianFilteredTiles
      // mask the tile
      maskedTile = gaussianMask1 * tile
      // determine the threshold for the top 0.5%-quantile
      threshold = getQuantileThreshold(maskedTile, 0.995)
      // binarize the tile
      marker = maskedTile >= threshold
      markerTiles. add(marker)
      // compose a binary mask for every tile
      // create a gaussian mask to highlight centered regions
 gaussianMask2 = gaussianMatrix(gaussRadius2, gaussSigma2)
 maskTiles = []
 FOR tile in Tiles
      // mask the tile
      maskedTile = gaussianMask2 * tile
      // get mean value of tile
      meanValue = mean(tile)
      // determine the min of meanValue and the mean of the block as threshold
      threshold = min({meanValue, meanOfBlocks[thisBlockIndex]})
      // binarize the tile
      mask = maskedTile >= threshold
      // median filter the mask
      medianFilteredMask = medianFilter(mask, medianRadius2)
      maskTiles.add(medianFilteredMask)
      // use the marker and the mask tiles to segment the spots via geodesic dilation
 dilatedTiles = geodesicDilation(markerTiles, maskTiles)
 // close the binary images
 closedTiles = binaryClosing(dilatedTile, closingRadius)
```

### List of reference numbers

- 110: image
- 112: micro-array
- 114: substrate
- 116: microscopic fluorescence image
- 118: retrieving step
- 120: spot
- 122: block
- 124: horizontal direction
- 126: vertical direction
- 128: pattern recognition step
- 130: printing pattern
- 132: test pattern
- 134: generating a set of test patterns
- 136: test grid point
- 138: image of a test micro-array
- 140: comparing the set of test patterns with information retrieved from the image
- 142: correlated image
- 144: correlated, high-pass filtered image
- 146: generating an estimate printing pattern
- 148: estimate printing pattern
- 150: grid point
- 152: spot of maximum intensity
- 154: sub-images
- 156: uncorrected block
- 158: corrected block
- 160: estimate printing pattern with block-specific correction
- 162: dividing step
- 164: sub-image
- 166: segmentation step
- 168: geodesic dilation
- 169: processed sub-image
- 170: marker image
- 172: image mask
- 174: morphological opening
- 176: filtering of the opened sub-images
- 178: filtered and opened sub-images
- 180: Gauss-masking
- 182: Gauss-masked sub-images
- 184: binarizing
- 186: binary pixels
- 188: multiplying the sub-images
- 190: Gauss-masked sub-images
- 192: binarizing the sub-images
- 194: binary sub-images
- 196: binary pixels
- 198: filtering the binary images
- 200: filtered binary images
- 202: geodesic dilated sub-images
- 204: morphological closed sub-images
- 206: selected sub-images
- 208: image evaluation system
- 210: retrieving unit
- 212: pattern recognition unit
- 214: dividing unit
- 216: segmentation unit
- 218: processor

## Claims

1. A computer-implemented method of evaluating at least one image (110) of at least one micro-array (112) on a substrate (114), the method comprising:
i. at least one retrieving step, comprising retrieving the at least one image (110) and retrieving at least one set of deposition data comprising information on a deposition of spots (120) of the micro-array (112) on the substrate (114);
ii. at least one pattern recognition step for automatically detecting a printing pattern (130) of the micro-array (112) in the image (110), comprising
ii.1. generating a set of test patterns (132) comprising a plurality of test patterns (132), by using the set of deposition data,
ii.2. comparing the set of test patterns (132) with information retrieved from the image (110), and
ii.3. generating an estimate printing pattern (148) in accordance with a degree of congruence of the test patterns (132) with the image (110), the estimate printing pattern (148) having a pattern of grid points (150);
iii. at least one dividing step, comprising automatically selecting sub-images (164) of the image (110) in accordance with the grid points (150) of the estimate printing pattern (148); and
iv. at least one segmentation step, comprising automatically segmenting spots (120) of the printing pattern (130) in the sub-images (164).

2. The method according to the preceding claim, wherein the set of deposition data comprises at least one printing file containing information on printing positions of the spots (120) of the micro-array (112).

3. The method according to any one of the preceding claims, wherein step ii.1. comprises generating the test patterns (132) by using the set of deposition data and by using additional transformation parameters, wherein the test patterns (132) of the set of test patterns (132) are generated by using different transformation parameters, wherein the transformation parameters comprise at least one item of information on: a scaling in at least one dimension; a rotational angle; an offset in at least one dimension.

4. The method according to any one of the preceding claims, wherein in step ii.3. the estimate printing pattern (148) is selected by using the set of test patterns (132), such that the estimate printing pattern (148) has a best match with the image (110).

5. The method according to any one of the preceding claims, wherein the test patterns (132) comprise a pattern of test grid points (136), wherein step ii.1. comprises a dilation of the test grid points (136), thereby generating an image of a test micro-array (138), wherein the degree of congruence is determined by comparing the image of the test micro-array (138) with the image (110).

6. The method according to any one of the preceding claims, wherein the comparing of the set of test patterns (132) with information retrieved from the image (110) in step ii.2. comprises using at least one correlation algorithm, wherein the correlation algorithm comprises at least one correlation of Fourier-transforms.

7. The method according to any one of the preceding claims, wherein the pattern recognition step ii. comprises at least one global pattern recognition step for detecting the entire printing pattern (130) of the micro-array (112) in the image (110), and wherein the pattern recognition step additionally comprises at least one partial pattern recognition and correction step for correcting the estimate printing pattern (148) of the micro-array (112) resulting from the global pattern recognition step for at least one subset of the set of deposition data.

8. The method according to the preceding claim, wherein the partial pattern recognition and correction step comprises selecting sub-images (154) of the image (110) around the grid points (150) of the estimate printing pattern (148), determining a center of intensity in the sub-images (154) and determining a deviation of the center of intensity in the sub-images (154) from the grid points (150) of the estimate printing pattern (148).

9. The method according to the preceding claim, wherein the partial pattern recognition and correction step comprises correcting the estimate printing pattern (148) by using the deviation of the center of intensity in the sub-images (154) from the grid points (150) of the estimate printing pattern (148).

10. The method according to any one of the preceding claims, wherein the dividing step iii. comprises selecting one sub-image (164) of the image (110) for each grid point (150) of the estimate printing pattern (148).

11. The method according to any one of the preceding claims, wherein step iv. comprises geodesic dilation of the sub-images (164), wherein the geodesic dilation of the sub-images (164) comprises using processed sub-images (169) and at least one image mask (172).

12. The method according to the preceding claim, wherein a processing of the sub-images (164) in step iv. comprises:
iv.1. at least one morphological opening of the sub-images (164),
iv.2. at least one filtering of the opened sub-images,
iv.3. Gauss-masking the filtered sub-images of step iv.2., and
iv.4. binarizing the masked sub-images of step iv.3.,
thereby obtaining the processed sub-images (169).

13. The method according to any one of the two preceding claims, wherein step iv. further comprises generating the at least one image mask (172) for evaluating the image (110) of the micro-array (112).

14. The method according to the preceding claim, wherein the generating of the at least one image mask (172) comprises:
iv.a. multiplying the sub-images (164) with an image of Gaussian-distributed intensity,
iv.b. binarizing the sub-images (190) generated in step iv.a., and
iv.c. filtering the binary images (194) of step iv.b. with a median-filter.

15. An image evaluation system (208) for evaluating at least one image (110) of at least one micro-array (112) on a substrate (114), the image evaluation system (208) comprising:
I. at least one retrieving unit (210) configured for retrieving the at least one image (110) and for retrieving at least one set of deposition data comprising information on a deposition of spots (120) of the micro-array (112) on the substrate (114);
II. at least one pattern recognition unit (212) configured for automatically detecting a printing pattern (130) of the micro-array (112) in the image (110), the detecting comprising the steps of
ii.1. generating a set of test patterns (132) comprising a plurality of test patterns (132) by using the set of deposition data,
ii.2. comparing the set of test patterns (132) with information retrieved from the image (110), and
ii.3. generating an estimate printing pattern (148) in accordance with a degree of congruence of the test patterns (132) with the image (110), the estimate printing pattern (148) having a pattern of grid points (150);
III. at least one dividing unit (214) configured for automatically selecting sub-images (164) of the image (110) in accordance with the grid points (150) of the estimate printing pattern (148); and
IV. at least one segmentation unit (216) configured for automatically segmenting spots (120) of the printing pattern (130) in the sub-images (164).
